# EUROPEAN PATENT APPLICATION

(11) **EP 3 988 820 A1**
(43) Date of publication of application: **27.04.2022**
(21) Application number: 20872852.7
(22) Date of filing: 28.09.2020
(51) Int. Cl.: F16H 63/10, F16H 61/32, F16H 3/091, B60K 17/04, B60K 6/387, B60K 6/40, B60K 6/445, B60K 6/547

(54) **DRIVE TRANSMISSION DEVICE FOR VEHICLE**

(30) Priority: 30.09.2019 JP 2019180152
(71) Applicant: AISIN CORPORATION, Aichi 448-8650 (JP)
(72) Inventor: KAWAMOTO Masaki, Kariya-shi, Aichi 448-8650 (JP); YAMAMOTO Tomoka, Kariya-shi, Aichi 448-8650 (JP)
(74) Representative: Kramer Barske Schmidtchen Patentanwälte PartG mbB
(86) International application number: PCT/JP2020/036629
(87) International publication number: WO 2021/065798

(57) **Abstract**

A drive mechanism (70) that drives an axially moving portion in an axial direction (L) includes a drive portion (71) that reciprocates a first member (91) along an intersecting direction (X) that is a direction that intersects the axial direction (L), a conversion portion (73) that converts a reciprocating motion of the first member (91) along the intersecting direction (X) into a reciprocating motion of a second member (92) along the axial direction (L), and a connecting portion (72) for connecting the second member (92) and the axially moving portion such that the axially moving portion reciprocates along the axial direction (L) as the second member (92) reciprocates along the axial direction (L).

## Description

### TECHNICAL FIELD

The present invention relates to a vehicle drive transmission device. The vehicle drive transmission device includes: an input member drivingly connected to an internal combustion engine; and a differential gear device that distributes rotation of a differential input gear to a pair of output members.

### BACKGROUND ART

An example of such a vehicle drive transmission device is disclosed in Japanese Unexamined Patent Application Publication No. 2017-222197 (JP 2017-222197 A) (Patent Document 1). Hereinafter, the reference numerals shown in parentheses in the description of the background art and the problem are those of Patent Document 1. A transaxle (1) shown in FIG. 3 of Patent Document 1 includes an input shaft (11) drivingly connected to an engine (2), a motor shaft (13) drivingly connected to a motor (3), a generator shaft (14) drivingly connected to a generator (4), and a differential (18) that distributes rotation of a ring gear (18a) to a pair of output shafts (12). Three power transmission paths are formed inside the transaxle (1): a power transmission path from the input shaft (11) to the output shafts (12); a power transmission path from the motor shaft (13) to the output shafts (12); and a power transmission path from the input shaft (11) to the generator shaft (14). As a result, the transaxle (1) is configured to be able to realize three traveling modes: an EV mode; a series mode; and a parallel mode.

The transaxle (1) shown in FIG. 3 of Patent Document 1 includes a switching mechanism (20A) for switching between a transmission state in which a driving force is transmitted between the input shaft (11) and the ring gear (18a), and a non-transmission state in which the driving force is not transmitted between the input shaft (11) and the ring gear (18a). As described in paragraphs 0032 to 0034 of Patent Document 1, the switching mechanism (20A) includes a sleeve (21s) that is driven in an axial direction by an actuator, and the transmission state and the non-transmission state can be switched depending on the axial position of the sleeve (21s).

### Related Art Documents

### Patent Documents

Patent Document 1: Japanese Unexamined Patent Application Publication No. 2017-222197 (JP 2017-222197 A)

### SUMMARY OF THE INVENTION

### Problem to be Solved by the Invention

As described above, in the vehicle drive transmission device shown in FIG. 3 of Patent Document 1, the switching mechanism for connecting and disconnecting the power transmission path between the input member (input shaft in Patent Document 1) and the differential input gear (ring gear in Patent Document 1) includes an axially moving portion (sleeve in Patent Document 1) that moves in the axial direction to switch between a transmission state and a non-transmission state. Patent Document 1 does not describe the arrangement configuration of the drive mechanism (actuator) that drives the axially moving portion in the axial direction. However, depending on how the drive mechanism is arranged, the axial dimension of the device may increase around the switching mechanism and the mountability on the vehicle may deteriorate. For example, in the transaxle (1) mounted on the vehicle (10) as shown in FIG. 1 of Patent Document 1, when the axial dimension around the switching mechanism (20A) increases, it may be difficult to arrange the engine (2), the transaxle (1), and the generator (4) side by side in the axial direction in the limited space in the front compartment.

Therefore, when the switching mechanism that connects and disconnects the power transmission path between the input member drivingly connected to the internal combustion engine and the differential input gear includes an axially moving portion that is driven in the axial direction, it is desired to realize a technique capable of arranging a drive mechanism for driving the axially moving portion while suppressing an increase in the axial dimension of the device around the switching mechanism.

### Means for Solving the Problem

A vehicle drive transmission device includes: an input member drivingly connected to an internal combustion engine; a differential gear device that includes a differential input gear and distributes rotation of the differential input gear to a pair of output members, each of the output members being drivingly connected to a wheel; and a gear mechanism that drivingly connects the input member and the differential input gear via a counter gear mechanism. A switching mechanism for switching between a transmission state in which a driving force is transmitted between the input member and the differential input gear, and a non-transmission state in which a driving force is not transmitted between the input member and the differential input gear is provided in the gear mechanism. The switching mechanism includes an axially moving portion that moves in an axial direction to switch between the transmission state and the non-transmission state. The axially moving portion includes at least one of a member that is arranged coaxially with the input member and moves in the axial direction, and a member that is arranged coaxially with the counter gear mechanism and moves in the axial direction. A drive mechanism that drives the axially moving portion in the axial direction includes a drive portion that reciprocates a first member along an intersecting direction that is a direction that intersects the axial direction, a conversion portion that converts a reciprocating motion of the first member along the intersecting direction into a reciprocating motion of a second member along the axial direction, and a connecting portion for connecting the second member and the axially moving portion such that the axially moving portion reciprocates along the axial direction as the second member reciprocates along the axial direction.

According to this configuration, a drive mechanism that drives the axially moving portion in the axial direction includes a drive portion that reciprocates a first member along an intersecting direction that is a direction that intersects the axial direction, a conversion portion that converts a reciprocating motion of the first member along the intersecting direction into a reciprocating motion of a second member along the axial direction, and a connecting portion for connecting the second member and the axially moving portion such that the axially moving portion reciprocates along the axial direction as the second member reciprocates along the axial direction. Unlike the above configuration, when the drive mechanism does not include the conversion portion, for example, the configuration may be such that the first member reciprocates along the axial direction, which may increase the arrangement region of the drive portion in the axial direction. In view of this, according to this configuration, the arrangement region of the drive portion in the axial direction can be kept small depending on the intersecting angle of the intersecting direction with respect to the axial direction. As a result, it is possible to arrange the drive mechanism while suppressing an increase in the dimension, in the axial direction, of the device around the switching mechanism.

Further features and advantages of the vehicle drive transmission device will be clarified from the following description of the embodiments described with reference to the drawings.

### BRIEF DESCRIPTION OF THE DRAWINGS

[FIG. 1] FIG. 1 is a skeleton diagram of a vehicle drive transmission device according to a first embodiment.
[FIG. 2] FIG. 2 is a sectional view of the vehicle drive transmission device according to the first embodiment.
[FIG. 3] FIG. 3 is a diagram showing an arrangement relationship of each component of the vehicle drive transmission device according to the first embodiment as seen in an axial direction.
[FIG. 4] FIG. 4 is a perspective view of a drive mechanism according to the first embodiment.
[FIG. 5] FIG. 5 is a skeleton diagram of a vehicle drive transmission device according to a second embodiment.
[FIG. 6] FIG. 6 is a sectional view of the vehicle drive transmission device according to the second embodiment.

### MODES FOR CARRYING OUT THE INVENTION

### [First Embodiment]

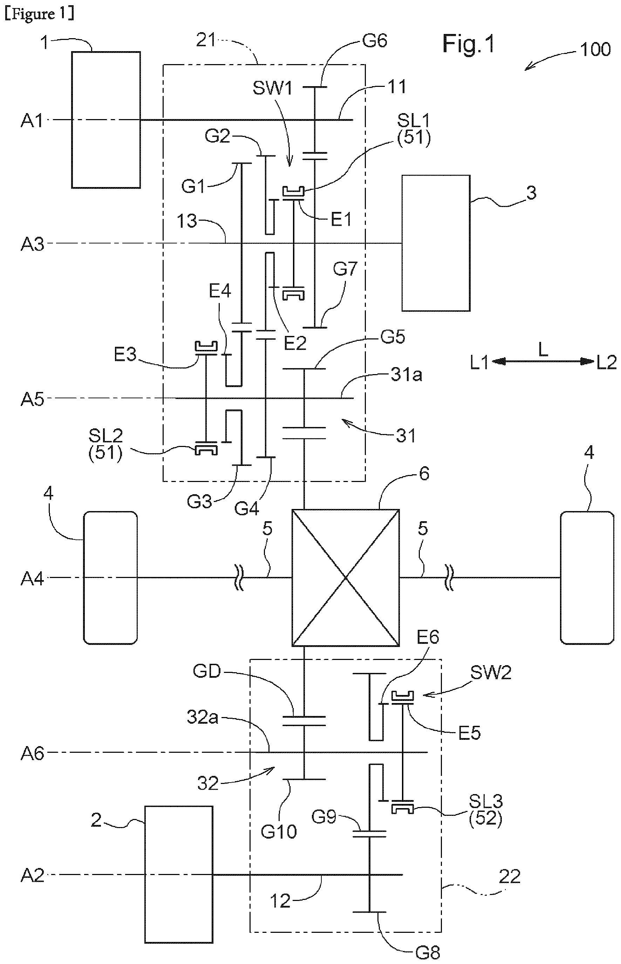

A first embodiment of a vehicle drive transmission device will be described with reference to the drawings (FIGS. 1 to 4). The direction of each member in the following description represents a direction of the member that is assembled to the vehicle drive transmission device. Terms related to the dimension, the arrangement direction, the arrangement position, and the like of each member represent concepts that include a state in which there is a difference due to an error (error to an extent that is allowed in manufacturing).

In the present specification, "drivingly connected" refers to a state in which two rotation elements are connected so that a driving force (synonymous with torque) can be transmitted, and includes a state in which the two rotation elements are connected so as to rotate integrally or a state in which the two rotation elements are connected so as to be able to transmit a driving force via one or two or more transmitting members. Such transmitting members include various members that transmit rotation at the same speed or at a changed speed (for example, a shaft, a gear mechanism, a belt, a chain, and the like), and may include an engagement device that selectively transmits rotation and driving force (for example, a friction engagement device, a meshing type engagement device, and the like).

In the present specification, the "rotary electric machine" is used as a concept including any of a motor (electric motor), a generator (power generator), and a motor generator that functions as both a motor and a generator as necessary. Further, in the present specification, regarding the arrangement of two members, "overlap as seen in a specific direction" means that when a virtual straight line parallel to the direction of line of sight is moved in directions orthogonal to the virtual straight line, there is at least an area where the virtual straight line intersects both the two members. Further, in the present specification, regarding the arrangement of the two members, "arrangement regions overlap in an axial direction" means that, within the arrangement region of one member in the axial direction, at least a part of the arrangement region of the other member in the axial direction is included.

As shown in FIG. 1, a vehicle drive transmission device 100 includes a third input member 13 that is drivingly connected to an internal combustion engine 3. In the present embodiment, the vehicle drive transmission device 100 further includes a first input member 11 that is drivingly connected to a first rotary electric machine 1 and a second input member 12 that is drivingly connected to a second rotary electric machine 2. The internal combustion engine 3 is a motor (for example, a gasoline engine, a diesel engine, and the like) that is driven by combustion of fuel inside the engine to take out driving force. The first rotary electric machine 1 and the second rotary electric machine 2 are electrically connected to a power storage device (not shown) such as a battery or a capacitor, and receive electric power supplied from the power storage device to perform power running, or supply electric power generated by inertial force of the vehicle, driving force of the internal combustion engine 3, or the like to the power storage device to cause the power storage device to store electric power. The first rotary electric machine 1 and the second rotary electric machine 2 are electrically connected to a common power storage device, and electric power generated by the first rotary electric machine 1 can cause the second rotary electric machine 2 to perform power running. In the present embodiment, the third input member 13 corresponds to the "input member".

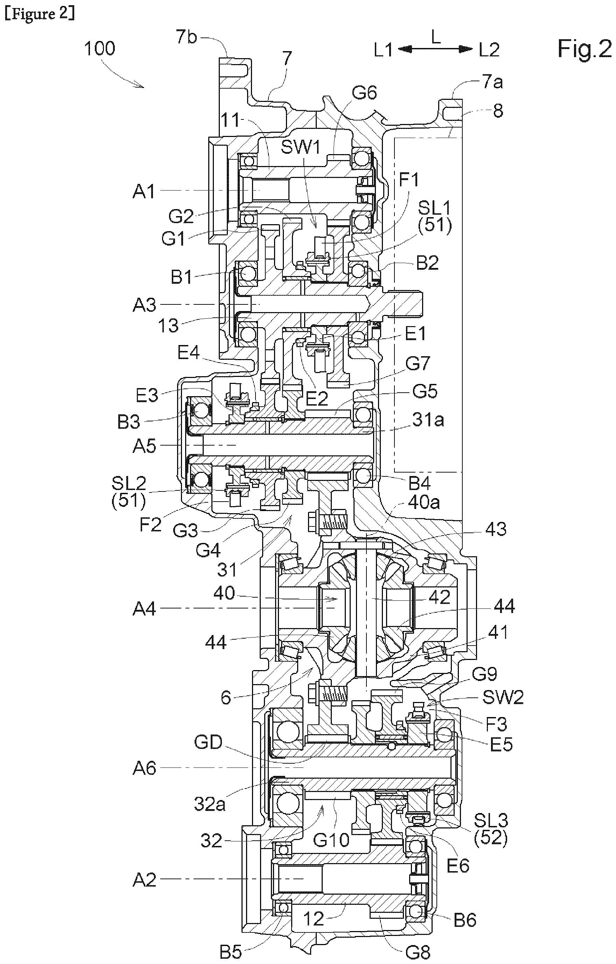

In the present embodiment, the first input member 11 is connected to the first rotary electric machine 1 so as to rotate integrally with the first rotary electric machine 1 (specifically, a rotor included in the first rotary electric machine 1; the same applies hereinafter), and the second input member 12 is connected to the second rotary electric machine 2 so as to rotate integrally with the second rotary electric machine 2 (specifically, a rotor included in the second rotary electric machine 2; the same applies hereinafter). Further, in the present embodiment, the third input member 13 is connected to the internal combustion engine 3 (specifically, an output member such as a crankshaft included in the internal combustion engine 3; the same applies hereinafter) via a torque limiter 8 (see FIG. 2). The torque limiter 8 limits the magnitude of the torque transmitted between the third input member 13 and the internal combustion engine 3 to block the transmission of excessive torque. When a damper device provided with the torque limiter 8 (a damper device including a damper mechanism and the torque limiter 8) is used, the third input member 13 is connected to the internal combustion engine 3 via the torque limiter 8 and the damper mechanism.

As shown in FIG. 2, the vehicle drive transmission device 100 includes a case 7, and each of the first input member 11, the second input member 12, and the third input member 13 is accommodated in the case 7. Here, "accommodating" means accommodating at least a part of the object to be accommodated. Each of the first input member 11, the second input member 12, and the third input member 13 is supported by the case 7 so as to be rotatable with respect to the case 7. The case 7 also accommodates a differential gear device 6, a first counter gear mechanism 31, and a second counter gear mechanism 32, which will be described later.

The vehicle drive transmission device 100 includes the differential gear device 6. As shown in FIG. 1, the differential gear device 6 includes a differential input gear GD, and distributes the rotation of the differential input gear GD to a pair of output members 5 that is drivingly connected to wheels 4. When the wheel 4 to which one output member 5 is drivingly connected is defined as a first wheel and the wheel 4 to which the other output member 5 is drivingly connected is defined as a second wheel, the first wheel and the second wheel constitute a pair of right and left wheels 4 (for example, a pair of right and left front wheels or a pair of right and left rear wheels). In the present embodiment, the output member 5 is a drive shaft, and each of the output members 5 is connected to the wheel 4 so as to rotate at the same speed as the wheel 4 to be connected. The output member 5 is connected to the wheel 4 to be connected via, for example, a constant velocity joint (not shown). By driving the wheels 4 with the torque transmitted via the output members 5, the vehicle (vehicle on which the vehicle drive transmission device 100 is mounted; the same applies hereinafter) travels.

As shown in FIG. 2, in the present embodiment, the differential gear device 6 includes a bevel gear type differential gear mechanism 40 and a differential case 41 accommodating the differential gear mechanism 40. The differential case 41 is supported by the case 7 so as to be rotatable with respect to the case 7. The differential input gear GD is connected to the differential case 41 so as to rotate integrally with the differential case 41. Specifically, the differential input gear GD is mounted on the differential case 41 so as to project outward from the differential case 41 in a radial direction (radial direction with reference to a fourth axis A4 described later).

The differential gear mechanism 40 includes pinion gears 43 and a pair of side gears 44 each meshing with the pinion gears 43. The pinion gears 43 (for example, two pinion gears 43) are supported by a pinion shaft 42 so as to be rotatable with respect to the pinion shaft 42 held in the differential case 41. The differential gear mechanism 40 distributes the rotation of the differential input gear GD to the pair of side gears 44. Each of the side gears 44 is connected (here, spline-connected) to the output member 5 to be connected so as to rotate integrally with the output member 5.

In the present embodiment, since the differential gear device 6 includes the bevel gear type differential gear mechanism 40, the arrangement position of the pinion shaft 42 in an axial direction L, which will be described later, is a central portion 40a of the differential gear mechanism 40 in the axial direction L. The differential gear device 6 may be configured to include a planetary gear type differential gear mechanism 40. In this case, the center position of the meshing portion (meshing portion of gears) of the differential gear mechanism 40 in the axial direction L is the central portion 40a of the differential gear mechanism 40 in the axial direction L.

As shown in FIGS. 1 and 2, the first input member 11 is arranged on a first axis A1, the second input member 12 is arranged on a second axis A2, the third input member 13 is arranged on a third axis A3, the differential gear device 6 is arranged on the fourth axis A4, the first counter gear mechanism 31 described later is arranged on a fifth axis A5, and the second counter gear mechanism 32 described later is arranged on a sixth axis A6. The first axis A1, the second axis A2, the third axis A3, the fourth axis A4, the fifth axis A5, and the sixth axis A6 are different axes (virtual axes) and are arranged in parallel with each other. The direction parallel to each of these axes (A1 to A6) (that is, the axial direction common to each axis) is defined as the axial direction L. One side in the axial direction L is defined as a first side L1 in the axial direction, and the other side in the axial direction L (the side opposite to the first side L1 in the axial direction L) is defined as a second side L2 in the axial direction.

As shown in FIG. 1, the third input member 13 is arranged at a position different from that of the internal combustion engine 3 in the axial direction L. Specifically, the third input member 13 is arranged on the first side L1 in the axial direction with respect to the internal combustion engine 3. As shown in FIG. 2, a first fixing portion 7a for fixing the case 7 to the internal combustion engine 3 is provided at an end portion of the case 7 on the second side L2 in the axial direction. The first fixing portion 7a is joined to the internal combustion engine 3 from the first side L1 in the axial direction by using a fastening member (not shown) such as a fastening bolt. Further, as shown in FIG. 1, the first input member 11 is arranged at a position different from that of the first rotary electric machine 1 in the axial direction L, and the second input member 12 is arranged at a position different from that of the second rotary electric machine 2 in the axial direction L. Specifically, the first input member 11 is arranged on the second side L2 in the axial direction with respect to the first rotary electric machine 1, and the second input member 12 is arranged on the second side L2 in the axial direction with respect to the second rotary electric machine 2. As shown in FIG. 2, a second fixing portion 7b for fixing the first rotary electric machine 1 to the case 7 is provided at an end portion of the case 7 on the first side L1 in the axial direction. The third input member 13 and the first counter gear mechanism 31 are, for example, arranged so as to overlap at least one of the first rotary electric machine 1 and the internal combustion engine 3 as seen in the axial direction along the axial direction L, for example, between the first rotary electric machine 1 and the internal combustion engine 3 in the axial direction L.

As shown in FIG. 1, the vehicle drive transmission device 100 includes a first gear mechanism 21 that drivingly connects the third input member 13 and the differential input gear GD via the first counter gear mechanism 31. That is, the first gear mechanism 21 includes the first counter gear mechanism 31. In the present embodiment, the first gear mechanism 21 further drivingly connects the first input member 11 and the third input member 13. The first gear mechanism 21 drivingly connects the first input member 11 and the differential input gear GD via the third input member 13. A first power transmission path that is a power transmission path between the first input member 11 and the third input member 13, and a third power transmission path that is a power transmission path between the third input member 13 and the differential input gear GD can be connected using the first gear mechanism 21. Further, in the present embodiment, the vehicle drive transmission device 100 includes a second gear mechanism 22 that drivingly connects the second input member 12 and the differential input gear GD. The second gear mechanism 22 drivingly connects the second input member 12 and the differential input gear GD without the first gear mechanism 21. In the present embodiment, the second gear mechanism 22 includes the second counter gear mechanism 32, and the second gear mechanism 22 drivingly connects the second input member 12 and the differential input gear GD via the second counter gear mechanism 32. A second power transmission path that is a power transmission path between the second input member 12 and the differential input gear GD can be connected by using the second gear mechanism 22. In the present embodiment, the first gear mechanism 21 corresponds to the "gear mechanism" and the first counter gear mechanism 31 corresponds to the "counter gear mechanism".

A first switching mechanism SW1 for switching between a transmission state in which the driving force is transmitted between the third input member 13 and the differential input gear GD, and a non-transmission state in which the driving force is not transmitted between the third input member 13 and the differential input gear GD is provided in the first gear mechanism 21. Therefore, the third power transmission path is selectively connected (that is, connected or disconnected) by the first switching mechanism SW1. On the other hand, in the present embodiment, the first power transmission path is constantly connected. In the following, the transmission state will be referred to as a "first transmission state", and the non-transmission state will be referred to as a "first non-transmission state". That is, the first switching mechanism SW1 switches between the first transmission state and the first non-transmission state. In the present embodiment, a second switching mechanism SW2 for switching between a second transmission state in which the driving force is transmitted between the second input member 12 and the differential input gear GD, and a second non-transmission state in which the driving force is not transmitted between the second input member 12 and the differential input gear GD is provided in the second gear mechanism 22. Therefore, the second power transmission path is selectively connected by the second switching mechanism SW2. In the present embodiment, the first switching mechanism SW1 corresponds to the "switching mechanism".

The transmission state of the driving force between the third input member 13 and the differential input gear GD is switched to the first non-transmission state by the first switching mechanism SW1, and the transmission state of the driving force between the second input member 12 and the differential input gear GD is switched to the second transmission state by the second switching mechanism SW2, whereby an electric traveling mode and a series mode can be realized in the vehicle drive transmission device 100. The electric traveling mode is a traveling mode in which the output members 5 are driven by the driving force of the second rotary electric machine 2 to cause the vehicle to travel. The series mode is a traveling mode in which the driving force of the internal combustion engine 3 causes the first rotary electric machine 1 to generate electric power and the driving force of the second rotary electric machine 2 drives the output members 5 to cause the vehicle to travel. In the electric traveling mode and the series mode, the first switching mechanism SW1 switches to the first non-transmission state and the third power transmission path is disconnected, whereby the first rotary electric machine 1 and the internal combustion engine 3 are separated from the output member 5.

Further, the transmission state of the driving force between the third input member 13 and the differential input gear GD is switched to the first transmission state by the first switching mechanism SW1, whereby a parallel mode can be realized in the vehicle drive transmission device 100. The parallel mode is a traveling mode in which the output members 5 are driven by at least the driving force of the internal combustion engine 3 to cause the vehicle to travel. In the parallel mode, the driving force of the second rotary electric machine 2 is transmitted to the output members 5 as needed to assist the driving force of the internal combustion engine 3. When the second rotary electric machine 2 is stopped in the parallel mode (for example, when the vehicle is traveling at high speed), the second switching mechanism SW2 switches to the second non-transmission state and disconnects the second power transmission path, which enables the second rotary electric machine 2 that is drivingly connected to the differential input gear GD without the third input member 13 to be disconnected from the differential input gear GD. Therefore, when the second rotary electric machine 2 is stopped in the parallel mode, it is possible to avoid co-rotation of the second rotary electric machine 2. As a result, the occurrence of energy loss due to the dragging of the second rotary electric machine 2 can be suppressed. In the parallel mode, the driving force of the first rotary electric machine 1 may be transmitted to the output members 5 in addition to or instead of the driving force of the second rotary electric machine 2, to assist the driving force of the internal combustion engine 3.

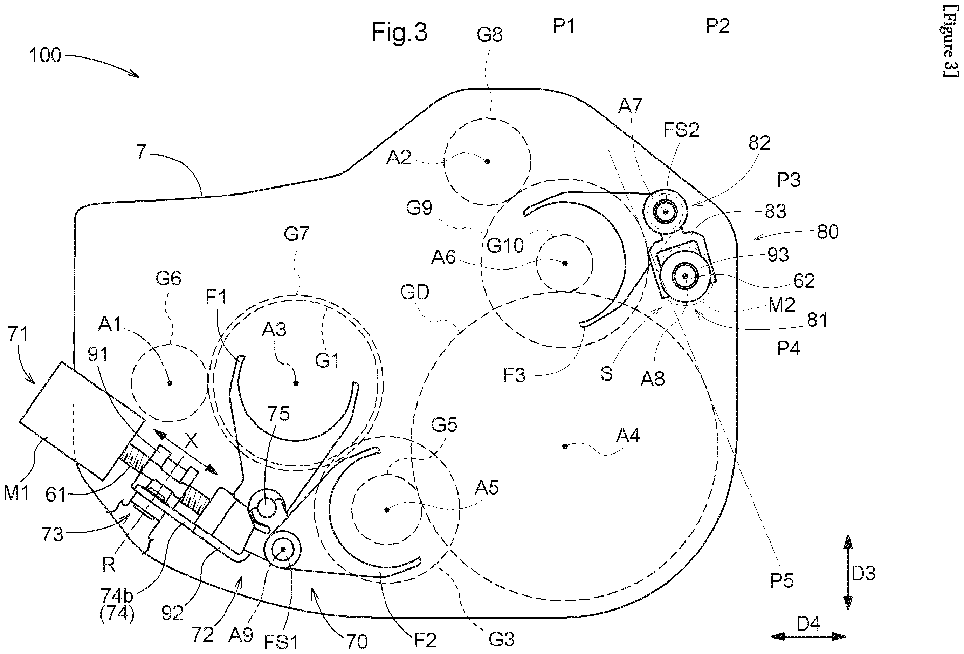

As shown in FIG. 1, the first gear mechanism 21 includes a sixth gear G6 arranged coaxially with the first input member 11 and a seventh gear G7 that is arranged coaxially with the third input member 13 and meshes with the sixth gear G6. In the present embodiment, the sixth gear G6 is connected to the first input member 11 so as to rotate integrally with the first input member 11, and the seventh gear G7 is connected to the third input member 13 so as to rotate integrally with the third input member 13. That is, in the present embodiment, the first input member 11 and the third input member 13 are constantly connected via the gear pair of the sixth gear G6 and the seventh gear G7, so that the first power transmission path between the first input member 11 and the third input member 13 is constantly connected. As shown in FIGS. 1 to 3, in the present embodiment, the sixth gear G6 is formed to have a smaller diameter than the seventh gear G7. That is, the gear ratio between the sixth gear G6 and the seventh gear G7 is set such that the rotation of the first input member 11 is decelerated and transmitted to the third input member 13 (in other words, the rotation of the third input member 13 is accelerated and transmitted to the first input member 11). In FIG. 3, a reference pitch circle of each gear is shown by a broken line. In FIG. 3, a second gear G2 and a fourth gear G4, which will be described later, are not shown.

The first gear mechanism 21 further includes a first gear G1 and the second gear G2 that are each arranged coaxially with the third input member 13. The first gear G1 is arranged on the first side L1 in the axial direction with respect to the second gear G2. Further, the first counter gear mechanism 31 includes a first counter shaft 31a, a third gear G3 that meshes with the first gear G1, the fourth gear G4 that meshes with the second gear G2, and a fifth gear G5 that rotates integrally with the first counter shaft 31a and meshes with the differential input gear GD. The third gear G3 is arranged on the first side L1 in the axial direction with respect to the fourth gear G4. The fifth gear G5 is arranged on the second side L2 in the axial direction with respect to the fourth gear G4. In the present embodiment, the first counter shaft 31a corresponds to the "counter shaft".

As shown in FIGS. 1 to 3, in the present embodiment, the fifth gear G5 is formed to have a smaller diameter than the differential input gear GD. That is, the gear ratio between the fifth gear G5 and the differential input gear GD is set such that the rotation of the first counter shaft 31a is decelerated and transmitted to the differential gear device 6 (specifically, the differential input gear GD). Further, in the present embodiment, the fifth gear G5 is formed to have a smaller diameter than the third gear G3 and a smaller diameter than the fourth gear G4.

The first switching mechanism SW1 is configured to switch between two first transmission states and one first non-transmission state, by switching between a state in which the driving force is transmitted between the third input member 13 and the first counter shaft 31a via the gear pair of the first gear G1 and the third gear G3, a state in which the driving force is transmitted between the third input member 13 and the first counter shaft 31a via the gear pair of the second gear G2 and the fourth gear G4, and a state in which the driving force is not transmitted between the third input member 13 and the first counter shaft 31a. In the following, the first transmission state realized in a state in which the driving force is transmitted between the third input member 13 and the first counter shaft 31a via the gear pair of the first gear G1 and the third gear G3 will be referred to as "first connection state". Further, the first transmission state realized in a state in which the driving force is transmitted between the third input member 13 and the first counter shaft 31a via the gear pair of the second gear G2 and the fourth gear G4 will be referred to as "second connection state".

In the present embodiment, the first gear G1 is connected to the third input member 13 so as to rotate integrally with the third input member 13, and the fourth gear G4 is connected to the first counter shaft 31a so as to rotate integrally with the first counter shaft 31a. The first switching mechanism SW1 is configured to switch between a state in which the second gear G2 is disconnected from the third input member 13 and the third gear G3 is connected to the first counter shaft 31a, a state in which the second gear G2 is connected to the third input member 13 and the third gear G3 is disconnected from the first counter shaft 31a, and a state in which the second gear G2 is disconnected from the third input member 13 and the third gear G3 is disconnected from the first counter shaft 31a. That is, the second gear G2 is selectively connected to the third input member 13 by the first switching mechanism SW1, and the third gear G3 is selectively connected to the first counter shaft 31a by the first switching mechanism SW1.

In a state in which the second gear G2 is disconnected from the third input member 13 and the third gear G3 is connected to the first counter shaft 31a, the driving force is transmitted between the third input member 13 and the first counter shaft 31a via the gear pair of the first gear G1 and the third gear G3, so that the first connection state, which is one of the first transmission states, is realized. Further, in a state in which the second gear G2 is connected to the third input member 13 and the third gear G3 is disconnected from the first counter shaft 31a, the driving force is transmitted between the third input member 13 and the first counter shaft 31a via the gear pair of the second gear G2 and the fourth gear G4, so that the second connection state, which is the other of the first transmission states, is realized. Furthermore, in a state in which the second gear G2 is disconnected from the third input member 13 and the third gear G3 is disconnected from the first counter shaft 31a, the driving force is not transmitted between the third input member 13 and the first counter shaft 31a, so that the first non-transmission state is realized. In the first connection state, the second gear G2 is supported by the third input member 13 so as to be rotatable relative to the third input member 13. In the second connection state, the third gear G3 is supported by the first counter shaft 31a so as to be rotatable relative to the first counter shaft 31a. In the first non-transmission state, the second gear G2 is supported by the third input member 13 so as to be rotatable relative to the third input member 13 and the third gear G3 is supported by the first counter shaft 31a so as to be rotatable relative to the first counter shaft 31a.

The rotation speed ratio between the third input member 13 and the first counter shaft 31a is determined according to the gear ratio between the first gear G1 and the third gear G3 in the first connection state, and between the second gear G2 and the fourth gear G4 in the second connection state. The gear ratio between the first gear G1 and the third gear G3 is set to be different from the gear ratio between the second gear G2 and the fourth gear G4. Therefore, by switching between the first connection state and the second connection state using the first switching mechanism SW1, the rotation speed ratio between the third input member 13 and the first counter shaft 31a can be switched to a different value.

When the ratio of the rotation speed of the third input member 13 to the rotation speed of the differential input gear GD is defined as a speed ratio, in the present embodiment, the gear ratio between the first gear G1 and the third gear G3 and the gear ratio between the second gear G2 and the fourth gear G4 are set so that the speed ratio in the first connection state is larger than the speed ratio in the second connection state. Therefore, in the first connection state, a low speed is established, and in the second connection state, a high speed is established. Since the gear ratio between the first gear G1 and the third gear G3 and the gear ratio between the second gear G2 and the fourth gear G4 are set in this way, in the present embodiment, the first gear G1 is formed to have a smaller diameter than the second gear G2, and the third gear G3 is formed to have a larger diameter than the fourth gear G4.

In the present embodiment, the first gear G1 is formed to have a larger diameter than the third gear G3. That is, the gear ratio between the first gear G1 and the third gear G3 is set so that the rotation of the third input member 13 is accelerated and transmitted to the first counter shaft 31a. In the present embodiment, the second gear G2 is formed to have a larger diameter than the fourth gear G4. That is, the gear ratio between the second gear G2 and the fourth gear G4 is set so that the rotation of the third input member 13 is accelerated and transmitted to the first counter shaft 31a.

The first switching mechanism SW1 includes a first axially moving portion 51 that moves in the axial direction L to switch between the first transmission state and the first non-transmission state. In the present embodiment, the first axially moving portion 51 moves in the axial direction L to switch between two first transmission states and one first non-transmission state. That is, the first axially moving portion 51 moves in the axial direction L to switch between the first connection state (one of the first transmission states), the second connection state (the other of the first transmission states), and the first non-transmission state. The first axially moving portion 51 includes at least one of a member that is arranged coaxially with the third input member 13 and moves in the axial direction L, and a member that is arranged coaxially with the first counter gear mechanism 31 and moves in the axial direction L. In the present embodiment, the first axially moving portion 51 includes both the member that is arranged coaxially with the third input member 13 and moves in the axial direction L (specifically, a first sleeve member SL1 described later), and the member that is arranged coaxially with the first counter gear mechanism 31 and moves in the axial direction L (specifically, a second sleeve member SL2 described later). In the present embodiment, the first axially moving portion 51 corresponds to the "axially moving portion", the first sleeve member SL1 corresponds to the "first axially moving member", and the second sleeve member SL2 corresponds to the "second axially moving member".

In the present embodiment, the first switching mechanism SW1 is configured by using a meshing type engagement device (dog clutch). In the present embodiment, the first switching mechanism SW1 is configured using two meshing type engagement devices: a first meshing type engagement device coaxially arranged with the third input member 13; and a second meshing type engagement device coaxially arranged with the first counter gear mechanism 31. Specifically, the first switching mechanism SW1 includes the first sleeve member SL1 that is arranged coaxially with the third input member 13 and moves in the axial direction L, a first engaging portion E1 that rotates integrally with the third input member 13, and a second engaging portion E2 that rotates integrally with the second gear G2. The first sleeve member SL1, the first engaging portion E1, and the second engaging portion E2 constitute a first meshing type engagement device. Further, the first switching mechanism SW1 includes the second sleeve member SL2 that is arranged coaxially with the first counter gear mechanism 31 and moves in the axial direction L, a third engaging portion E3 that rotates integrally with the first counter shaft 31a, and a fourth engaging portion E4 that rotates integrally with the third gear G3. The second sleeve member SL2, the third engaging portion E3, and the fourth engaging portion E4 constitute a second meshing type engagement device.

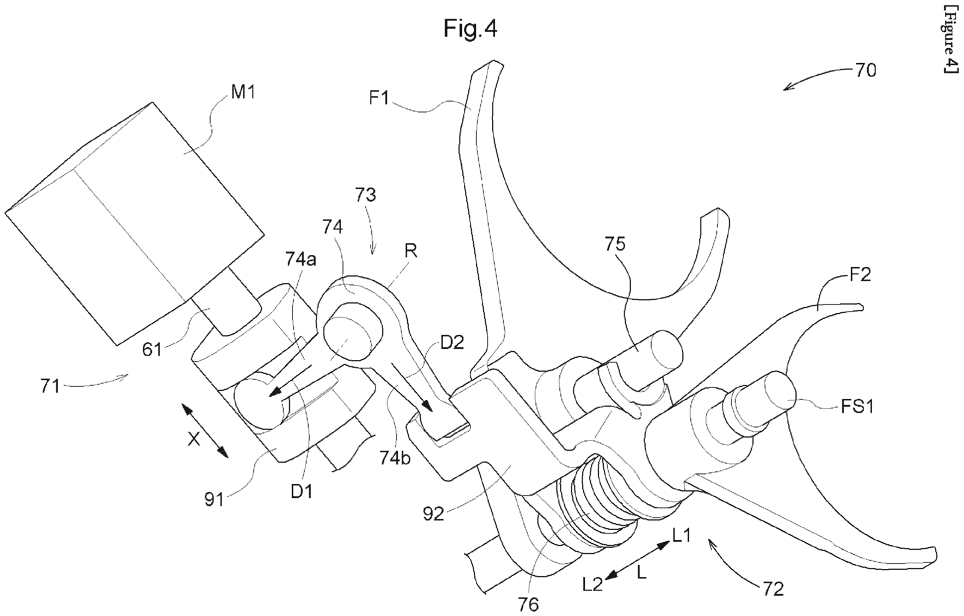

The position of the first sleeve member SL1 in the axial direction L is switched by a first shift fork F1 (see FIGS. 2 to 4) supported by the case 7 so as to be movable in the axial direction L. The first shift fork F1 is engaged with the first sleeve member SL1 (specifically, a groove formed on the outer peripheral surface of the first sleeve member SL1) so as to move integrally with the first sleeve member SL1 in the axial direction L in a state in which the rotation of the first sleeve member SL1 (rotation around the third axis A3) is allowed. The position of the second sleeve member SL2 in the axial direction L is switched by a second shift fork F2 (see FIGS. 2 to 4) supported by the case 7 so as to be movable in the axial direction L. The second shift fork F2 is engaged with the second sleeve member SL2 (specifically, a groove formed on the outer peripheral surface of the second sleeve member SL2) so as to move integrally with the second sleeve member SL2 in the axial direction L in a state in which the rotation of the second sleeve member SL2 (rotation around the fifth axis A5) is allowed. Although details will be described later, a first drive mechanism 70 (see FIGS. 3 and 4) for driving the first axially moving portion 51 (in the present embodiment, the first sleeve member SL1 and the second sleeve member SL2) in the axial direction L is configured by using the first shift fork F1 and the second shift fork F2.

In the present embodiment, internal teeth are formed on the inner peripheral surface of the first sleeve member SL1, and external teeth are formed on the outer peripheral surfaces of the first engaging portion E1 and the second engaging portion E2. The first sleeve member SL1 is connected to the first engaging portion E1 so as not to be rotatable relative to the first engaging portion E1 and so as to be movable relative to the first engaging portion E1 in the axial direction L, with the first sleeve member SL1 arranged so as to be fitted onto the first engaging portion E1. The first engaging portion E1 (specifically, the external teeth formed on the first engaging portion E1) engages with the first sleeve member SL1 (specifically, the internal teeth formed on the first sleeve member SL1), regardless of the position of the first sleeve member SL1 in the axial direction L. On the other hand, the second engaging portion E2 (specifically, the external teeth formed on the second engaging portion E2) selectively engages with the first sleeve member SL1 (specifically, the internal teeth formed on the first sleeve member SL1), depending on the position of the first sleeve member SL1 in the axial direction L.

In the present embodiment, internal teeth are formed on the inner peripheral surface of the second sleeve member SL2, and external teeth are formed on the outer peripheral surfaces of the third engaging portion E3 and the fourth engaging portion E4. The second sleeve member SL2 is connected to the third engaging portion E3 so as not to be rotatable relative to the third engaging portion E3 and so as to be movable relative to the third engaging portion E3 in the axial direction L, with the second sleeve member SL2 arranged so as to be fitted onto the third engaging portion E3. The third engaging portion E3 (specifically, external teeth formed on the third engaging portion E3) engages with the second sleeve member SL2 (specifically, the internal teeth formed on the second sleeve member SL2), regardless of the position of the second sleeve member SL2 in the axial direction L. On the other hand, the fourth engaging portion E4 (specifically, external teeth formed on the fourth engaging portion E4) selectively engages with the second sleeve member SL2 (specifically, the internal teeth formed on the second sleeve member SL2), depending on the position of the second sleeve member SL2 in the axial direction L.

The first switching mechanism SW1 is configured to switch between the first connection state, the second connection state, and the first non-transmission state depending on the positions of the first sleeve member SL1 and the second sleeve member SL2 in the axial direction L. Specifically, the first non-transmission state is realized when the first sleeve member SL1 moves to a position in the axial direction L in which the first sleeve member SL1 engages with the first engaging portion E1 and does not engage with the second engaging portion E2 (for example, the position of the first sleeve member SL1 shown in FIGS. 1 and 2), and the second sleeve member SL2 moves to a position in the axial direction L in which the second sleeve member SL2 engages with the third engaging portion E3 and does not engage with the fourth engaging portion E4 (for example, the position of the second sleeve member SL2 shown in FIGS. 1 and 2). Further, the second connection state is realized when the first sleeve member SL1 moves to a position in the axial direction L in which the first sleeve member SL1 engages with the first engaging portion E1 and the second engaging portion E2 (a position further on the first side L1 in the axial direction than the position of the first sleeve member SL1 shown in FIGS. 1 and 2), and the second sleeve member SL2 moves to a position in the axial direction L in which the second sleeve member SL2 engages with the third engaging portion E3 and does not engage with the fourth engaging portion E4 (for example, the position of the second sleeve member SL2 shown in FIGS. 1 and 2, or a position further on the first side L1 in the axial direction than the position of the second sleeve member SL2 shown in FIGS. 1 and 2). Furthermore, the first connection state is realized when the first sleeve member SL1 moves to a position in the axial direction L in which the first sleeve member SL1 engages with the first engaging portion E1 and does not engage with the second engaging portion E2 (for example, the position of the first sleeve member SL1 shown in FIGS. 1 and 2), and the second sleeve member SL2 moves to a position in the axial direction L in which the second sleeve member SL2 engages with the third engaging portion E3 and the fourth engaging portion E4 (a position further on the second side L2 in the axial direction than the position of the second sleeve member SL2 shown in FIGS. 1 and 2).

As shown in FIG. 2, in the present embodiment, the third input member 13 is supported by the case 7 at two points in the axial direction L via a first bearing B1 and a second bearing B2 arranged on the second side L2 in the axial direction with respect to the first bearing B1. The first gear G1, the second gear G2, and the seventh gear G7 are arranged between the first bearing B1 and the second bearing B2 in the axial direction L. Further, in the present embodiment, the first counter shaft 31a is supported by the case 7 at two points in the axial direction L via a third bearing B3 and a fourth bearing B4 arranged on the second side L2 in the axial direction with respect to the third bearing B3. The third gear G3, the fourth gear G4, and the fifth gear G5 are arranged between the third bearing B3 and the fourth bearing B4 in the axial direction L. In the present embodiment, the fourth bearing B4 is arranged so that the arrangement region in the axial direction L overlaps with that of the second bearing B2.

In the present embodiment, the fifth gear G5 is arranged on the second side L2 in the axial direction (that is, the side in the axial direction L on which the internal combustion engine 3 is arranged) with respect to the third gear G3 and the fourth gear G4. As a result, as compared to the case in which the fifth gear G5 is arranged on the first side L1 in the axial direction with respect to the third gear G3 and the fourth gear G4, the fifth gear G5 and the differential input gear GD that meshes with the fifth gear G5 are easily arranged closer to the second side L2 in the axial direction. As shown in FIG. 2, in the present embodiment, the portion of the differential gear device 6 (specifically, the differential case 41) on the second side L2 in the axial direction is arranged so that the arrangement region in the axial direction L overlaps with that of the torque limiter 8. Therefore, by arranging the differential input gear GD closer to the second side L2 in the axial direction, the overlapping ratio of the arrangement regions of the differential gear device 6 and the torque limiter 8 in the axial direction L is easily increased. This makes it easier to reduce the dimension, in the axial direction L, of the entire vehicle drive transmission device 100 or the entire unit including the vehicle drive transmission device 100 and the torque limiter 8.

In the present embodiment, the members arranged coaxially with the third input member 13 to constitute the first switching mechanism SW1 (specifically, the first sleeve member SL1, the first engaging portion E1, and the second engaging portion E2) are located on the second side L2 in the axial direction with respect to the first gear G1 and the second gear G2. The seventh gear G7 is arranged on the second side L2 in the axial direction with respect to the members arranged coaxially with the third input member 13 to constitute the first switching mechanism SW1. The first switching mechanism SW1 (specifically, the portion coaxially arranged with the third input member 13) and the seventh gear G7 are arranged so that the arrangement region in the axial direction L overlaps with that of the fifth gear G5. On the other hand, the members arranged coaxially with the first counter gear mechanism 31 to constitute the first switching mechanism SW1 (specifically, the second sleeve member SL2, the third engaging portion E3, and the fourth engaging portion E4) are arranged on the first side L1 in the axial direction with respect to the third gear G3 and the fourth gear G4. The first switching mechanism SW1 (specifically, the portion coaxially arranged with the first counter gear mechanism 31) is arranged so that the arrangement region in the axial direction L overlaps with that of the first bearing B1.

The vehicle drive transmission device 100 includes the first drive mechanism 70 that drives the first axially moving portion 51 in the axial direction L. As shown in FIGS. 3 and 4, the first drive mechanism 70 includes a first drive portion 71, a conversion portion 73, and a first connecting portion 72. The first drive portion 71 reciprocates a first member 91 along an intersecting direction X, which is the direction that intersects the axial direction L. The conversion portion 73 converts the reciprocating motion of the first member 91 along the intersecting direction X into a reciprocating motion of a second member 92 along the axial direction L. The first connecting portion 72 connects the second member 92 and the first axially moving portion 51 so that the first axially moving portion 51 reciprocates along the axial direction L as the second member 92 reciprocates along the axial direction L. In the present embodiment, the first connecting portion 72 connects the second member 92 and the first sleeve member SL1 so that the first sleeve member SL1 reciprocates along the axial direction L as the second member 92 reciprocates along the axial direction L, and connects the second member 92 and the second sleeve member SL2 so that the second sleeve member SL2 reciprocates along the axial direction L as the second member 92 reciprocates along the axial direction L. In the present embodiment, the first drive mechanism 70 corresponds to the "drive mechanism", the first drive portion 71 corresponds to the "drive portion", and the first connecting portion 72 corresponds to the "connecting portion".

As described above, the first drive mechanism 70 is configured to reciprocate the first member 91 along the intersecting direction X to reciprocate the first axially moving portion 51 along the axial direction L. Since the intersecting direction X is a direction that intersects the axial direction L (for example, a direction orthogonal to the axial direction L), the arrangement region of the first drive portion 71 in the axial direction L can be kept small depending on the intersecting angle of the intersecting direction X with respect to the axial direction L. As a result, it is possible to arrange the first drive mechanism 70 while suppressing an increase in the dimension, in the axial direction L, of the vehicle drive transmission device 100 around the first switching mechanism SW1. The first drive mechanism 70 is, for example, arranged so as to overlap at least one of the first rotary electric machine 1 and the internal combustion engine 3 as seen in the axial direction along the axial direction L, between the first rotary electric machine 1 and the internal combustion engine 3 in the axial direction L.

As shown in FIG. 3, in the present embodiment, the intersecting direction X is set so as to extend along at least one of the outer circumference of the gear arranged coaxially with the third input member 13 (that is, the gear arranged on the third axis A3) and the outer circumference of the first counter gear mechanism 31, as seen in the axial direction along the axial direction L. Here, the intersecting direction X extending along the outer circumference of the gear arranged coaxially with the third input member 13 as seen in the axial direction means that, the intersection angle between the tangent line (for example, the tangent line of the reference pitch circle, the tooth tip circle, or the tooth bottom circle) at the portion closest to the movement region (the reciprocating movement region along the intersecting direction X) of the first member 91 on the outer circumference of the above gear and the intersecting direction X is less than a set angle, as seen in the axial direction. Further, the intersecting direction X extending along the outer circumference of the first counter gear mechanism 31 as seen in the axial direction means that, the intersection angle between the tangent line (for example, the tangent line of the reference pitch circle, the tooth tip circle, or the tooth bottom circle) at the portion closest to the movement region of the first member 91 on the outer circumference of the first counter gear mechanism 31 and the intersecting direction X is less than a set angle, as seen in the axial direction. The outer circumference of the first counter gear mechanism 31 can be the outer circumference of the portion of the first counter gear mechanism 31 having the largest outer diameter (dimension in the radial direction with reference to the fifth axis A5). In the present embodiment, the third gear G3 is the portion of the first counter gear mechanism 31 having the largest outer diameter. The above set angle can be, for example, 5 degrees, 10 degrees, 15 degrees, 20 degrees, or the like.

As shown in FIG. 3, in the present embodiment, the intersecting direction X is set along the outer circumference of the gear coaxially arranged with the third input member 13 as seen in the axial direction. The first drive portion 71 is arranged at a position that does not overlap the gear coaxially arranged with the third input member 13 as seen in the axial direction. In the present embodiment, the three gears of the first gear G1, the second gear G2, and the seventh gear G7 are arranged coaxially with the third input member 13, and the first drive portion 71 is arranged at a position that does not overlap any of the gears arranged coaxially with the third input member 13 (that is, a position that does not overlap any of the first gear G1, the second gear G2, and the seventh gear G7) as seen in the axial direction. Further, in the present embodiment, the first drive portion 71 is arranged at a position that does not overlap the first counter gear mechanism 31 (here, a position that does not overlap the third gear G3) as seen in the axial direction.

As shown in FIGS. 3 and 4, in the present embodiment, the first drive portion 71 includes a first electric motor M1 and a first rotating shaft 61 rotated by the first electric motor M1. The first rotating shaft 61 is supported by the case 7 so as to be rotatable about an axis along the intersecting direction X. The first rotating shaft 61 is a screw shaft having a screw formed on the outer periphery thereof, and is arranged so as to extend along the intersecting direction X. Further, the first member 91 is a nut having a screw formed on the inner periphery thereof, and is screwed onto the first rotating shaft 61. Therefore, the rotational movement of the first rotating shaft 61 around the axis along the intersecting direction X is converted into a linear motion of the first member 91 along the intersecting direction X. In other words, the rotational driving force of the first rotating shaft 61 is converted into a linear driving force of the first member 91 along the intersecting direction X. The first drive portion 71 reciprocates the first member 91 along the intersecting direction X by rotating the first rotating shaft 61 in both directions by the first electric motor M1. In this example, the first rotating shaft 61 and the first member 91 constitute a ball screw mechanism, and balls (not shown) are interposed between the first rotating shaft 61 and the first member 91.

As shown in FIGS. 3 and 4, in the present embodiment, the conversion portion 73 includes a lever member 74 that swings around a swing axis R that intersects both the axial direction L and the intersecting direction X. The lever member 74 is supported by the case 7 so as to be swingable around the swing axis R. In the present embodiment, the swing axis R is an axis (virtual axis) orthogonal to both the axial direction L and the intersecting direction X. As shown in FIG. 4, when the two directions intersecting the swing axis R are defined as a first direction D1 and a second direction D2, the lever member 74 includes a first extending portion 74a extending from the swing axis R in the first direction D1, and a second extending portion 74b extending from the swing axis R in the second direction D2. In the present embodiment, the intersecting direction X is set in a direction orthogonal to the axial direction L. Further, in the present embodiment, the first direction D1 and the second direction D2 are set so as to be orthogonal to each other.

As shown in FIG. 4, an end portion of the first extending portion 74a on the side opposite to the swing axis R side (hereinafter referred to as "first tip portion") is connected to the first member 91, and an end portion of the second extending portion 74b on the side opposite to the swing axis R side (hereinafter referred to as "second tip portion") is connected to the second member 92. The first tip portion and the first member 91 are connected so that the linear motion of the first member 91 along the intersecting direction X is converted into the rotational motion of the lever member 74 around the swing axis R. Further, the second tip portion and the second member 92 are connected so that the rotational motion of the lever member 74 around the swing axis R is converted into the linear motion of the second member 92 along the axial direction L. By connecting the lever member 74 to the first member 91 and the second member 92 in this way, a thrust in the intersecting direction X acting on the first tip portion from the first member 91 can be converted into a thrust in the axial direction L with the swinging of the lever member 74 around the swing axis R to cause the thrust to act on the second member 92 from the second tip portion. As a result, the reciprocating motion of the first member 91 along the intersecting direction X is converted into the reciprocating motion of the second member 92 along the axial direction L via the lever member 74. The configuration of the conversion portion 73 shown in FIGS. 3 and 4 is an example, and various configurations can be adopted as the conversion portion 73.

As shown in FIG. 4, in the present embodiment, the first connecting portion 72 includes the first shift fork F1, the second shift fork F2, and a first fork shaft FS1. As shown in FIG. 3, the first fork shaft FS1 is arranged on a ninth axis A9. The ninth axis A9 is an axis (virtual axis) different from the third axis A3 (rotation axis of the first sleeve member SL1) and the fifth axis A5 (rotation axis of the second sleeve member SL2), and is arranged in parallel with the third axis A3 and the fifth axis A5. The first fork shaft FS1 is supported by the case 7 so as to be movable in the axial direction L. The second member 92 and the first fork shaft FS1 are connected so that the first fork shaft FS1 reciprocates along the axial direction L as the second member 92 reciprocates along the axial direction L. Here, the second member 92 is connected to the first fork shaft FS1 via an urging member 76, and the linear driving force of the second member 92 along the axial direction L is configured to be transmitted to the first fork shaft FS1 via the urging member 76.

The first shift fork F1 and the second shift fork F2 are connected to the first fork shaft FS1. Specifically, the first shift fork F1 and the first fork shaft FS1 are connected to each other so that the first shift fork F1 reciprocates along the axial direction L as the first fork shaft FS1 reciprocates along the axial direction L. Further, the second shift fork F2 and the first fork shaft FS1 are connected to each other so that the second shift fork F2 reciprocates along the axial direction L as the first fork shaft FS1 reciprocates along the axial direction L.

The position of the first fork shaft FS1 in the axial direction L can be switched between a first position for realizing the first connection state, a second position for realizing the second connection state, and a third position for realizing the first non-transmission state. The third position is a position on the first side L1 in the axial direction with respect to the first position, and the second position is a position on the first side L1 in the axial direction with respect to the third position. In the present embodiment, the second shift fork F2 is connected to the first fork shaft FS1 so as to constantly move integrally with the first fork shaft FS1 in the axial direction L. Therefore, the position of the second shift fork F2 in the axial direction L is switched between a position corresponding to the first position (a position further on the second side L2 in the axial direction than the position of the second shift fork F2 shown in FIG. 2), a position corresponding to the second position (a position further on the first side L1 in the axial direction than the position of the second shift fork F2 shown in FIG. 2), and a position corresponding to the third position (for example, the position of the second shift fork F2 shown in FIG. 2).

On the other hand, in the present embodiment, the first shift fork F1 is connected to the first fork shaft FS1 so that the first shift fork F1 moves integrally with the first fork shaft FS1 in the axial direction L when the first fork shaft FS1 moves between the second position and the third position, but so that the position of the first shift fork F1 in the axial direction L is maintained when the first fork shaft FS1 moves between the first position and the third position. That is, the position of the first shift fork F1 in the axial direction L is switched between the position corresponding to the second position (the position further on the first side L1 in the axial direction than the position of the first shift fork F1 shown in FIG. 2) and the position corresponding to the third position (for example, the position of the first shift fork F1 shown in FIG. 2), as the first fork shaft FS1 moves between the second position and the third position. When the first fork shaft FS1 moves between the first position and the third position, the position of the first shift fork F1 in the axial direction L is maintained at the position corresponding to the third position. In the example shown in FIGS. 3 and 4, the first shift fork F1 moves along the axial direction L while being guided by a support shaft 75 fixed to the case 7. The configuration of the first connecting portion 72 shown in FIGS. 3 and 4 is an example, and various configurations can be adopted as the first connecting portion 72.

In the vehicle drive transmission device 100 of the present embodiment, the first non-transmission state is switched to the first connection state with the rotation speed of the third gear G3 controlled to match (that is, synchronize with) the rotation speed of the first counter shaft 31a, and the first non-transmission state is switched to the second connection state with the rotation speed of the third input member 13 controlled to match the rotation speed of the second gear G2. Therefore, in the present embodiment, the first switching mechanism SW1 is not provided with a synchronization mechanism.

As shown in FIG. 1, the second gear mechanism 22 includes an eighth gear G8 arranged coaxially with the second input member 12. The second counter gear mechanism 32 includes a second counter shaft 32a, a ninth gear G9 that meshes with the eighth gear G8, and a tenth gear G10 that rotates integrally with the second counter shaft 32a and meshes with the differential input gear GD. In the present embodiment, the eighth gear G8 is formed to have a smaller diameter than the ninth gear G9. That is, the gear ratio between the eighth gear G8 and the ninth gear G9 is set so that the rotation of the second input member 12 is decelerated and transmitted to the second counter shaft 32a. Further, in the present embodiment, the tenth gear G10 is formed to have a smaller diameter than the differential input gear GD. That is, the gear ratio between the tenth gear G10 and the differential input gear GD is set such that the rotation of the second counter shaft 32a is decelerated and transmitted to the differential gear device 6 (specifically, the differential input gear GD). In the present embodiment, the ninth gear G9 is formed to have a larger diameter than the tenth gear G10.

The second switching mechanism SW2 is configured to switch between the second transmission state and the second non-transmission state, by switching between a state in which the driving force is transmitted between the second input member 12 and the second counter shaft 32a via the gear pair of the eighth gear G8 and the ninth gear G9, and a state in which the driving force is not transmitted between the second input member 12 and the second counter shaft 32a. In the present embodiment, the eighth gear G8 is connected to the second input member 12 so as to rotate integrally with the second input member 12. The second switching mechanism SW2 is configured to switch between a state in which the ninth gear G9 is connected to the second counter shaft 32a and a state in which the ninth gear G9 is disconnected from the second counter shaft 32a. That is, the ninth gear G9 is selectively connected to the second counter shaft 32a by the second switching mechanism SW2. In a state in which the ninth gear G9 is connected to the second counter shaft 32a, the driving force is transmitted between the second input member 12 and the second counter shaft 32a via the gear pair of the eighth gear G8 and the ninth gear G9, so that the second transmission state is realized. Furthermore, in a state in which the ninth gear G9 is disconnected from the second counter shaft 32a, the driving force is not transmitted between the second input member 12 and the second counter shaft 32a, so that the second non-transmission state is realized. In the state in which the ninth gear G9 is disconnected from the second counter shaft 32a, the ninth gear G9 is supported by the second counter shaft 32a so as to be rotatable relative to the second counter shaft 32a.

The second switching mechanism SW2 includes a second axially moving portion 52 that moves in the axial direction L to switch between the second transmission state and the second non-transmission state. In the present embodiment, the second axially moving portion 52 includes a member (specifically, a third sleeve member SL3 described later) that is arranged coaxially with the second counter gear mechanism 32 and moves in the axial direction L. In the present embodiment, the second switching mechanism SW2 is configured by using a meshing type engagement device (dog clutch). In the present embodiment, the second switching mechanism SW2 is configured by using a meshing type engagement device that is coaxially arranged with the second counter gear mechanism 32. Specifically, the second switching mechanism SW2 includes the third sleeve member SL3 that is arranged coaxially with the second counter shaft 32a and moves in the axial direction L, a fifth engaging portion E5 that rotates integrally with the second counter shaft 32a, and a sixth engaging portion E6 that rotates integrally with the ninth gear G9. The third sleeve member SL3, the fifth engaging portion E5, and the sixth engaging portion E6 constitute a meshing type engagement device that is coaxially arranged with the second counter gear mechanism 32.

The position of the third sleeve member SL3 in the axial direction L is switched by a third shift fork F3 (see FIGS. 2 and 3) supported by the case 7 so as to be movable in the axial direction L. The third shift fork F3 is engaged with the third sleeve member SL3 (specifically, a groove formed on the outer peripheral surface of the third sleeve member SL3) so as to move integrally with the third sleeve member SL3 in the axial direction L in a state in which the rotation of the third sleeve member SL3 (rotation around the sixth axis A6) is allowed. Although details will be described later, a second drive mechanism 80 (see FIG. 3) for driving the second axially moving portion 52 (in the present embodiment, the third sleeve member SL3) in the axial direction L is configured by using the third shift fork F3.

In the present embodiment, internal teeth are formed on the inner peripheral surface of the third sleeve member SL3, and external teeth are formed on the outer peripheral surfaces of the fifth engaging portion E5 and the sixth engaging portion E6. The third sleeve member SL3 is connected to the fifth engaging portion E5 so as not to be rotatable relative to the fifth engaging portion E5 and so as to be movable relative to the fifth engaging portion E5 in the axial direction L, with the third sleeve member SL3 arranged so as to be fitted onto the fifth engaging portion E5. The fifth engaging portion E5 (specifically, the external teeth formed on the fifth engaging portion E5) engages with the third sleeve member SL3 (specifically, the internal teeth formed on the third sleeve member SL3), regardless of the position of the third sleeve member SL3 in the axial direction L. On the other hand, the sixth engaging portion E6 (specifically, external teeth formed on the sixth engaging portion E6) selectively engages with the third sleeve member SL3 (specifically, the internal teeth formed on the third sleeve member SL3), depending on the position of the third sleeve member SL3 in the axial direction L.

The second switching mechanism SW2 is configured to switch between the second transmission state and the second non-transmission state depending on the position of the third sleeve member SL3 in the axial direction L. Specifically, the second non-transmission state is realized when the third sleeve member SL3 moves to a position in the axial direction L in which the third sleeve member SL3 engages with the fifth engaging portion E5 and does not engage with the sixth engaging portion E6 (for example, the position of the third sleeve member SL3 shown in FIGS. 1 and 2). Further, the second transmission state is realized when the third sleeve member SL3 moves to a position in the axial direction L in which the third sleeve member SL3 engages with the fifth engaging portion E5 and the sixth engaging portion E6 (the position further on the first side L1 in the axial direction than the position of the third sleeve member SL3 shown in FIGS. 1 and 2).

As shown in FIG. 2, in the present embodiment, the second switching mechanism SW2 is arranged so that the arrangement region in the axial direction L overlaps with that of the differential case 41 on the second side L2 in the axial direction with respect to the differential input gear GD. Specifically, the third sleeve member SL3, the fifth engaging portion E5, and the sixth engaging portion E6 are arranged so that the arrangement region in the axial direction L overlaps with that of the differential case 41 on the second side L2 in the axial direction with respect to the differential input gear GD. Here, the second switching mechanism SW2 (specifically, the third sleeve member SL3, the fifth engaging portion E5, and the sixth engaging portion E6) is arranged so that the arrangement region in the axial direction L overlaps with that of the differential case 41 on the second side L2 in the axial direction with respect to the central portion 40a of the differential gear mechanism 40.

In the present embodiment, the ninth gear G9 is arranged on the second side L2 in the axial direction with respect to the tenth gear G10 (that is, on the second side L2 in the axial direction with respect to the differential input gear GD). Here, the ninth gear G9 is arranged on the second side L2 in the axial direction with respect to the central portion 40a of the differential gear mechanism 40 in the axial direction L. The second switching mechanism SW2 is arranged on the second side L2 in the axial direction with respect to the ninth gear G9. Specifically, the sixth engaging portion E6 is arranged on the second side L2 in the axial direction with respect to the ninth gear G9 (specifically, a main body portion of the ninth gear G9 in which a teeth portion is formed on the outer peripheral portion of the ninth gear G9), and the fifth engaging portion E5 is arranged on the second side L2 in the axial direction with respect to the sixth engaging portion E6.

As shown in FIG. 2, in the present embodiment, the second input member 12 is supported by the case 7 at two points in the axial direction L via a fifth bearing B5 and a sixth bearing B6 arranged on the second side L2 in the axial direction with respect to the fifth bearing B5. The eighth gear G8 is arranged between the fifth bearing B5 and the sixth bearing B6 in the axial direction L. In the present embodiment, the second switching mechanism SW2 is arranged so that the arrangement region in the axial direction L overlaps with that of the sixth bearing B6. Here, the third sleeve member SL3 and the fifth engaging portion E5 are arranged so that the arrangement region in the axial direction L overlap with that of the sixth bearing B6.

The vehicle drive transmission device 100 includes the second drive mechanism 80 that drives the second axially moving portion 52 in the axial direction L. As shown in FIG. 3, in the present embodiment, the second drive mechanism 80 includes a second drive portion 81 and a second connecting portion 82. The second drive portion 81 reciprocates a third member 93 along the axial direction L. The second connecting portion 82 connects the third member 93 and the second axially moving portion 52 so that the second axially moving portion 52 reciprocates along the axial direction L as the third member 93 reciprocates along the axial direction L. As described above, in the present embodiment, the second drive mechanism 80 is configured to reciprocate the third member 93 along the axial direction L to reciprocate the second axially moving portion 52 (specifically, the third sleeve member SL3) along the axial direction L.

As shown in FIGS. 1 and 2, the second input member 12, the differential gear device 6, and the second counter gear mechanism 32 are arranged separately on three axes parallel to each other (specifically, the second axis A2, the fourth axis A4, and the sixth axis A6). Here, as shown in FIG. 3, a virtual plane including the fourth axis A4 and the sixth axis A6 is defined as a first plane P1, and a virtual plane parallel to the first plane P1 and tangent to the outer circumference of the differential gear device 6 is defined as a second plane P2. Two virtual planes orthogonal to the first plane P1 and tangent to the outer circumference of the second counter gear mechanism 32 are defined as a third plane P3 and a fourth plane P4. Further, a virtual plane tangent to both the outer circumference of the differential gear device 6 and the outer circumference of the second counter gear mechanism 32 is defined as a fifth plane P5.

The second plane P2 and the fifth plane P5 can be defined so as to be tangent to the outer circumference of the portion of the differential gear device 6 having the largest outer diameter (dimension in the radial direction with reference to the fourth axis A4). In the present embodiment, the differential input gear GD is the portion of the differential gear device 6 having the largest outer diameter, and as shown in FIG. 3, the second plane P2 and the fifth plane P5 are defined so as to be tangent to the outer circumference of the differential input gear GD (specifically, so as to be tangent to the reference pitch circle of the differential input gear GD as seen in the axial direction along the axial direction L). The second plane P2 and the fifth plane P5 may be defined so as to be tangent to a circle (tooth tip circle, tooth bottom circle, or the like) other than the reference pitch circle of the differential input gear GD as seen in the axial direction.

Further, the third plane P3, the fourth plane P4, and the fifth plane P5 can be defined so as to be tangent to the outer circumference of the portion of the second counter gear mechanism 32 having the largest outer diameter (dimension in the radial direction with reference to the sixth axis A6). In the present embodiment, the ninth gear G9 is the portion of the second counter gear mechanism 32 having the largest outer diameter, and as shown in FIG. 3, the third plane P3, the fourth plane P4, and the fifth plane P5 are defined so as to be tangent to the outer circumference of the ninth gear G9 (specifically, so as to be tangent to the reference pitch circle of the ninth gear G9 as seen in the axial direction). The third plane P3, the fourth plane P4, and the fifth plane P5 may be defined so as to be tangent to a circle (tooth tip circle, tooth bottom circle, or the like) other than the reference pitch circle of the ninth gear G9 as seen in the axial direction.

When a direction parallel to the first plane P1 as seen in the axial direction along the axial direction L is defined as a third direction D3, and a direction orthogonal to the third direction D3 as seen in the axial direction is defined as a fourth direction D4, a virtual plane parallel to the first plane P1 and tangent to the outer circumference of the differential gear device 6 (that is, a plane that can serve as the second plane P2) exists on both sides of the first plane P1 in the fourth direction D4. As shown in FIG. 3, in the present embodiment, the first axis A1, the second axis A2, the third axis A3, and the fifth axis A5 are arranged on the same side with respect to the first plane P1 (the same side in the fourth direction D4), and the second plane P2 is defined so as to be arranged on the side opposite to the side on which each of these axes (A1, A2, A3, A5) is arranged with respect to the first plane P1 (the opposite side in the fourth direction D4). That is, the second plane P2 is defined so that each of the above axes and the second plane P2 are separately arranged on opposite sides of the first plane P1 in the fourth direction D4. The configuration may be such that at least one of the first axis A1, the second axis A2, the third axis A3, and the fifth axis A5 (for example, the second axis A2) is arranged on the same side as the second plane P2 with respect to the first plane P1 (the same side in the fourth direction D4).

Further, there are two virtual planes that are tangent to both the outer circumference of the differential gear device 6 and the outer circumference of the second counter gear mechanism 32 (that is, planes that can serve as the fifth plane P5). As shown in FIG. 3, as seen in the axial direction, when a space surrounded by the outer circumference of the differential gear device 6 (here, the outer circumference of the differential input gear GD), the outer circumference of the second counter gear mechanism 32 (here, the outer circumference of the ninth gear G9), and the fifth plane P5 is defined as a target space S, in the present embodiment, the fifth plane P5 is defined so that the target space S and the second plane P2 are arranged on the same side with respect to the first plane P1 (the same side in the fourth direction D4). Further, in the present embodiment, among the two virtual planes orthogonal to the first plane P1 and tangent to the outer circumference of the second counter gear mechanism 32, the virtual plane with the longer distance from the fourth axis A4 (distance along the third direction D3) is defined as the third plane P3.

In the present embodiment, the differential gear device 6 is formed to have a diameter larger than the second counter gear mechanism 32. Specifically, the differential input gear GD is formed to have a larger diameter than either the ninth gear G9 and the tenth gear G10 having the larger diameter (in the present embodiment, the ninth gear G9). Therefore, as shown in FIG. 3, a space (hereinafter referred to as "specific space") in which members can be arranged without causing a great influence on an increase in the dimension of the entire device as seen in the axial direction is formed between the outer circumference of the second counter gear mechanism 32 (here, the outer circumference of the ninth gear G9) and the second plane P2. Specifically, as seen in the axial direction, a space surrounded by the outer circumference of the second counter gear mechanism 32 (here, the outer circumference of the ninth gear G9), the outer circumference of the differential gear device 6 (here, the outer circumference of the differential input gear GD), the second plane P2, and the third plane P3 is the specific space. In the vehicle drive transmission device 100, since the third sleeve member SL3 is arranged coaxially with the second counter gear mechanism 32 instead of with the second input member 12, the specific space is more easily used as the arrangement space for the second drive mechanism 80.

Specifically, as shown in FIG. 3, at least a part of the second drive mechanism 80 is arranged at a position that is between the first plane P1 and the second plane P2 and that does not overlap with any of the second counter gear mechanism 32 and the differential gear device 6 (here, a position that does not overlap with any of the ninth gear G9 and the differential input gear GD; the same applies hereinafter) as seen in the axial direction. In the example shown in FIG. 3, all or most of the part of the second drive mechanism 80 excluding the third shift fork F3 is arranged at a position that is between the first plane P1 and the second plane P2 and that does not overlap with any of the second counter gear mechanism 32 and the differential gear device 6 as seen in the axial direction. Further, at least a part of the second drive mechanism 80 is arranged at a position that is between the third plane P3 and the fourth plane P4 and that does not overlap with any of the second counter gear mechanism 32 and the differential gear device 6 as seen in the axial direction. In the example shown in FIG. 3, all or most of the part of the second drive mechanism 80 is arranged at a position that is between the third plane P3 and the fourth plane P4 and that does not overlap with any of the second counter gear mechanism 32 and the differential gear device 6 as seen in the axial direction.

Further, in the present embodiment, at least a part of the second drive mechanism 80 is arranged in the target space S (as described above, the space surrounded by the outer circumference of the differential gear device 6, the outer circumference of the second counter gear mechanism 32, and the fifth plane P5 as seen in the axial direction) as seen in the axial direction. In the present embodiment, the second drive mechanism 80 includes a second electric motor M2, a second rotating shaft 62, the third member 93, a connecting member 83, and a second fork shaft FS2. In the example shown in FIG. 3, a part of the second electric motor M2, a part of the third member 93, and a part of the connecting member 83 are arranged in the target space S as seen in the axial direction.

In the present embodiment, the third shift fork F3 is connected to the second fork shaft FS2 arranged on a seventh axis A7. The seventh axis A7 is an axis (virtual axis) different from the sixth axis A6, and is arranged in parallel with the sixth axis A6. The second fork shaft FS2 is supported by the case 7 so as to be movable in the axial direction L. The second drive mechanism 80 is configured to move the second fork shaft FS2 in the axial direction L with the driving force of the driving force source (here, the second electric motor M2) to move the third shift fork F3 connected to the second fork shaft FS2 in the axial direction L. In the present embodiment, the third shift fork F3 is connected to the second fork shaft FS2 so as to move integrally with the second fork shaft FS2 in the axial direction L. In the example shown in FIG. 3, the seventh axis A7 is arranged at a position that is between the first plane P1 and the second plane P2 and between the third plane P3 and the fourth plane P4 and that does not overlap with any of the second counter gear mechanism 32 and the differential gear device 6 as seen in the axial direction.

In the present embodiment, the second electric motor M2 and the second rotating shaft 62 rotated by the second electric motor M2 are arranged on an eighth axis A8 that is an axis (virtual axis) different from the seventh axis A7. In the example shown in FIG. 3, the eighth axis A8 is arranged in parallel with the seventh axis A7. Further, in the example shown in FIG. 3, the eighth axis A8 is arranged at a position that is between the first plane P1 and the second plane P2 and between the third plane P3 and the fourth plane P4 and that does not overlap with any of the second counter gear mechanism 32 and the differential gear device 6 as seen in the axial direction. The second drive mechanism 80 is configured to convert the rotational motion of the second rotating shaft 62 around the eighth axis A8 into the linear motion of the second fork shaft FS2 along the axial direction L to move the second fork shaft FS2 in the axial direction L.

In the example shown in FIG. 3, the second rotating shaft 62 is a screw shaft having a screw formed on the outer periphery thereof, and the third member 93 is a nut screwed onto the second rotating shaft 62. Therefore, the rotational motion of the second rotating shaft 62 around the eighth axis A8 is converted into the linear motion of the third member 93 along the eighth axis A8 (here, the linear motion along the axial direction L). In this example, the second rotating shaft 62 and the third member 93 constitute a ball screw mechanism, and balls (not shown) are interposed between the second rotating shaft 62 and the third member 93. The linear driving force (linear motion force) of the third member 93 is transmitted to the second fork shaft FS2 via the connecting member 83 that connects the third member 93 and the second fork shaft FS2, so that the second fork shaft FS2 moves along the axial direction L. Although details are omitted, the connecting member 83 is connected to the third member 93 so as to move integrally with the third member 93 along the eighth axis A8. The connecting member 83 is connected to the second fork shaft FS2 via an urging member (not shown), and the linear driving force of the connecting member 83 that moves integrally with the third member 93 is configured to be transmitted to the second fork shaft FS2 via the urging member.

As described above, in the present embodiment, the second drive portion 81 that reciprocates the third member 93 along the axial direction L includes the second electric motor M2 and the second rotating shaft 62. The second connecting portion 82 that connects the third member 93 and the second axially moving portion 52 so that the second axially moving portion 52 reciprocates along the axial direction L as the third member 93 reciprocates along the axial direction L, includes the connecting member 83, the second fork shaft FS2, and the third shift fork F3. The motion conversion mechanism shown in FIG. 3 (the mechanism that converts the rotational motion of the second rotating shaft 62 around the eighth axis A8 into the linear motion of the second fork shaft FS2 along the axial direction L) is an example, and various configurations can be adopted as the motion conversion mechanism.

In the vehicle drive transmission device 100 of the present embodiment, the second non-transmission state is switched to the second transmission state with the rotation speed of the ninth gear G9 controlled to match (that is, synchronize with) the rotation speed of the second counter shaft 32a. Therefore, in the present embodiment, the second switching mechanism SW2 is not provided with a synchronization mechanism.

### [Second Embodiment]

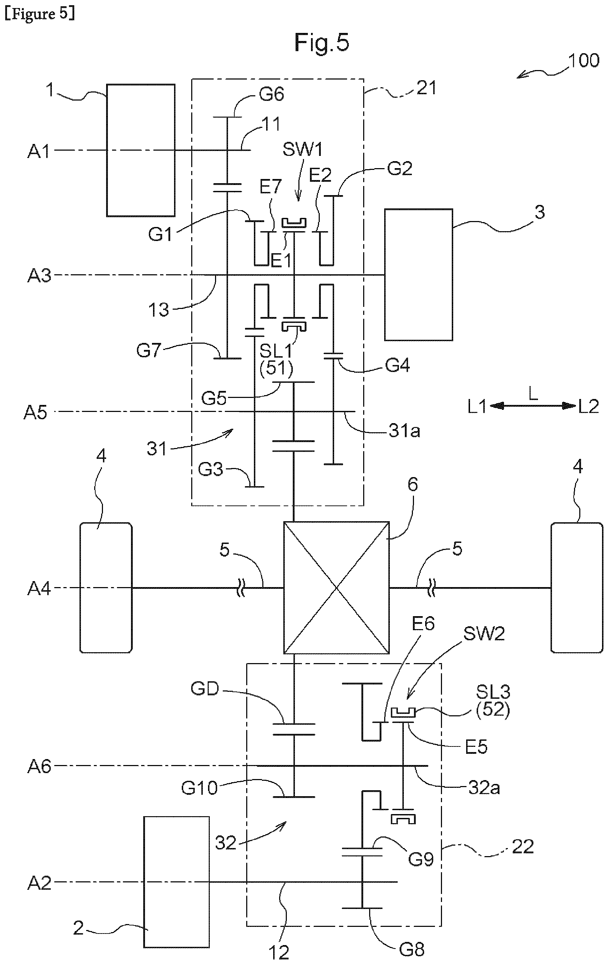

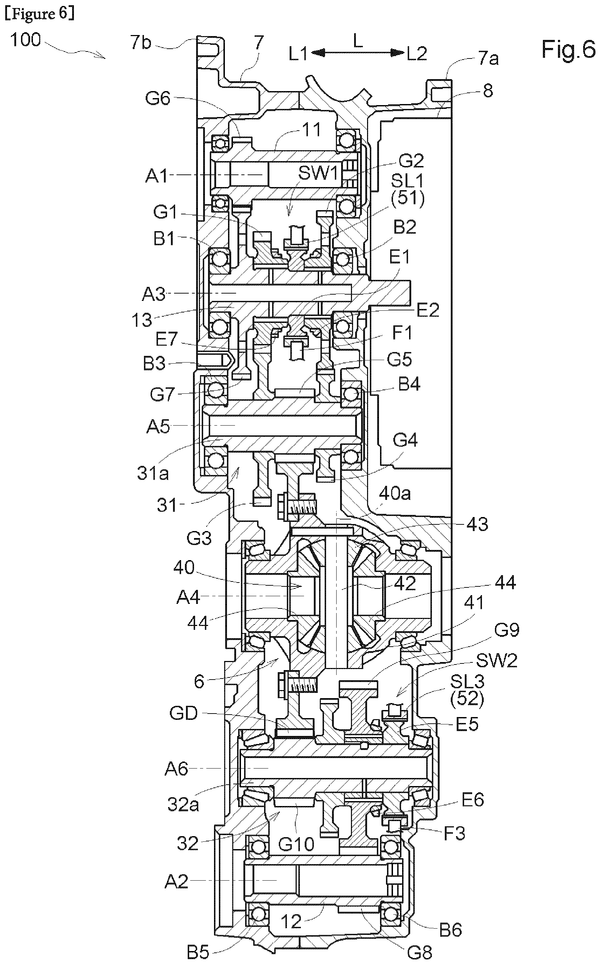

A second embodiment of a vehicle drive transmission device will be described with reference to the drawings (FIGS. 5 and 6). Hereinafter, the vehicle drive transmission device of the present embodiment will be described focusing on the differences from the first embodiment. Points not particularly specified are the same as those in the first embodiment, and the same reference numerals are given and detailed description thereof will be omitted.

As shown in FIGS. 5 and 6, in the present embodiment, the first axially moving portion 51 includes a member that is arranged coaxially with the third input member 13 and moves in the axial direction L (specifically, the first sleeve member SL1), as in the first embodiment. However, in the present embodiment, unlike the first embodiment, the first axially moving portion 51 does not include a member that is arranged coaxially with the first counter gear mechanism 31 and moves in the axial direction L (specifically, the second sleeve member SL2). In the present embodiment, the first switching mechanism SW1 is configured by using a meshing type engagement device that is coaxially arranged with the third input member 13.

In the present embodiment, the third gear G3 and the fourth gear G4 are connected to the first counter shaft 31a so as to rotate integrally with the first counter shaft 31a. The first switching mechanism SW1 is configured to switch between a state in which only the first gear G1, of the first gear G1 and the second gear G2, is connected to the third input member 13, a state in which only the second gear G2, of the first gear G1 and the second gear G2, is connected to the third input member 13, and a state in which both the first gear G1 and the second gear G2 are disconnected from the third input member 13. That is, the first gear G1 and the second gear G2 are selectively connected to the third input member 13 by the first switching mechanism SW1.

In a state in which only the first gear G1, of the first gear G1 and the second gear G2, is connected to the third input member 13, the driving force is transmitted between the third input member 13 and the first counter shaft 31a via the gear pair of the first gear G1 and the third gear G3, so that the first connection state, which is one of the first transmission states, is realized. Further, in a state in which only the second gear G2, of the first gear G1 and the second gear G2, is connected to the third input member 13, the driving force is transmitted between the third input member 13 and the first counter shaft 31a via the gear pair of the second gear G2 and the fourth gear G4, so that the second connection state, which is the other of the first transmission states, is realized. Furthermore, in a state in which both the first gear G1 and the second gear G2 are disconnected from the third input member 13, the first non-transmission state is realized. In the first connection state, the second gear G2 is supported by the third input member 13 so as to be rotatable relative to the third input member 13. In the second connection state, the first gear G1 is supported by the third input member 13 so as to be rotatable relative to the third input member 13. In the first non-transmission state, the first gear G1 and the second gear G2 are supported by the third input member 13 so as to be rotatable relative to the third input member 13.

As in the first embodiment, the first switching mechanism SW1 includes the first sleeve member SL1 that is arranged coaxially with the third input member 13 and moves in the axial direction L, the first engaging portion E1 that rotates integrally with the third input member 13, and the second engaging portion E2 that rotates integrally with the second gear G2. In the present embodiment, the first switching mechanism SW1 further includes a seventh engaging portion E7 that rotates integrally with the first gear G1. External teeth are formed on the outer peripheral surface of the seventh engaging portion E7, and the seventh engaging portion E7 (specifically, the external teeth formed on the seventh engaging portion E7) selectively engages with the first sleeve member SL1 (specifically, the internal teeth formed on the first sleeve member SL1), depending on the position of the first sleeve member SL1 in the axial direction L. In the present embodiment, since the third gear G3 is connected to the first counter shaft 31a so as to rotate integrally with the first counter shaft 31a, unlike the first embodiment, the first switching mechanism SW1 does not include the second sleeve member SL2 that is arranged coaxially with the first counter gear mechanism 31 and moves in the axial direction L, the third engaging portion E3 that rotates integrally with the first counter shaft 31a, nor the fourth engaging portion E4 that rotates integrally with the third gear G3.

The first switching mechanism SW1 is configured to switch between the first connection state, the second connection state, and the first non-transmission state depending on the position of the first sleeve member SL1 in the axial direction L. Specifically, the first non-transmission state is realized when the first sleeve member SL1 moves to a position in the axial direction L in which the first sleeve member SL1 engages with the first engaging portion E1 and does not engage with the second engaging portion E2 nor the seventh engaging portion E7 (for example, the position of the first sleeve member SL1 shown in FIGS. 5 and 6). Further, the second connection state is realized when the first sleeve member SL1 moves to a position in the axial direction L in which the first sleeve member SL1 engages with the first engaging portion E1 and the second engaging portion E2 and does not engage with the seventh engaging portion E7 (the position further on the second side L2 in the axial direction than the position of the first sleeve member SL1 shown in FIGS. 5 and 6). Further, the first connection state is realized when the first sleeve member SL1 moves to a position in the axial direction L in which the first sleeve member SL1 engages with the first engaging portion E1 and the seventh engaging portion E7 and does not engage with the second engaging portion E2 (the position further on the first side L1 in the axial direction than the position of the first sleeve member SL1 shown in FIGS. 5 and 6).

As shown in FIGS. 5 and 6, in the present embodiment, the second engaging portion E2 is arranged on the first side L1 in the axial direction with respect to the second gear G2, and the seventh engaging portion E7 is arranged on the first side L1 in the axial direction with respect to the second engaging portion E2 and on the second side L2 in the axial direction with respect to the first gear G1. The first engaging portion E1 is arranged between the second engaging portion E2 and the seventh engaging portion E7 in the axial direction L. Therefore, the first engaging portion E1, the second engaging portion E2, and the seventh engaging portion E7 are arranged between the first gear G1 and the second gear G2 in the axial direction L. The first sleeve member SL1 is also arranged between the first gear G1 and the second gear G2 in the axial direction L.

As described above, the first switching mechanism SW1 is arranged between the first gear G1 and the second gear G2 in the axial direction L. Specifically, the members arranged coaxially with the third input member 13 (that is, on the third axis A3) to constitute the first switching mechanism SW1 (here, the first sleeve member SL1, the first engaging portion E1, the second engaging portion E2, and the seventh engaging portion E7) are arranged between the first gear G1 and the second gear G2 in the axial direction L.

As described above, in the present embodiment, the first switching mechanism SW1 is arranged between the first gear G1 and the second gear G2 in the axial direction L. Further, in the present embodiment, the fifth gear G5 is arranged between the third gear G3 that meshes with the first gear G1 and the fourth gear G4 that meshes with the second gear G2, in the axial direction L. As a result, as shown in FIGS. 5 and 6, the first switching mechanism SW1 can be arranged so that the arrangement region overlaps with that of the fifth gear G5 in the axial direction L. That is, it is possible to arrange the first switching mechanism SW1 by effectively utilizing the space formed on the radially outer side of the fifth gear G5 (on the outer side in the radial direction with reference to the fifth axis A5). Since the fifth gear G5 that meshes with the differential input gear GD is arranged between the third gear G3 and the fourth gear G4 in the axial direction L, as compared to the case in which the fifth gear G5 is arranged on one side (for example, the second side L2 in the axial direction) of the third gear G3 and the fourth gear G4 in the axial direction L, it is easier to arrange the differential gear device 6 so that the overlapping ratio of the arrangement regions of the differential gear device 6 and the first switching mechanism SW1 in the axial direction L increases, which makes it possible to reduce the dimension of the entire device in the axial direction L. In the present embodiment, the third bearing B3 is arranged so that the arrangement region in the axial direction L overlaps with that of the first bearing B1.

Further, in the present embodiment, the seventh gear G7 is arranged on the first side L1 in the axial direction (that is, the side opposite to the side on which the internal combustion engine 3 is arranged in the axial direction L) with respect to the first gear G1 and the second gear G2. As a result, as compared to the case in which the seventh gear G7 is arranged on the second side L2 in the axial direction with respect to the first gear G1 and the second gear G2, the first gear G1 and the second gear G2 are more easily arranged closer to the second side L2 in the axial direction, and thus the fifth gear G5 and the differential input gear GD that meshes with the fifth gear G5 are more easily arranged closer to the second side L2 in the axial direction. As shown in FIG. 6, in the present embodiment, as in the first embodiment, the portion of the differential gear device 6 (specifically, the differential case 41) on the second side L2 in the axial direction is arranged so that the arrangement region in the axial direction L overlaps with that of the torque limiter 8. Therefore, by arranging the differential input gear GD closer to the second side L2 in the axial direction, the overlapping ratio of the arrangement regions of the differential gear device 6 and the torque limiter 8 in the axial direction L is easily increased. This makes it easier to reduce the dimension of the entire vehicle drive transmission device 100 or the entire unit including the vehicle drive transmission device 100 and the torque limiter 8 in the axial direction L.

Further, in the present embodiment, the differential input gear GD is arranged on the first side L1 in the axial direction with respect to the central portion 40a of the differential gear mechanism 40 in the axial direction L. In the present embodiment, the portion of the differential case 41 arranged at the central portion 40a is formed to have a larger dimension in the radial direction (in the radial direction with reference to the fourth axis A4) than the portion of the differential case 41 further on the first side L1 in the axial direction than the differential input gear GD. Further, the third gear G3 formed to have a larger diameter than the fourth gear G4 is arranged on the first side L1 in the axial direction with respect to the fifth gear G5 (that is, on the first side L1 in the axial direction with respect to the differential input gear GD). By arranging the differential input gear GD and the third gear G3 in this way, it is easier to arrange the third gear G3 at a position distanced in the axial direction L from the central portion 40a in which the radial dimension of the differential gear device 6 tends to be large. As a result, the fifth axis A5 on which the first counter gear mechanism 31 is arranged and the fourth axis A4 on which the differential gear device 6 is arranged are easily arranged closer to each other as seen in the axial direction along the axial direction L, while avoiding interference between the third gear G3, the fourth gear G4, and the differential gear device 6.

Although details are omitted, in the present embodiment as well, as in the first embodiment, the first drive mechanism 70 including the first drive portion 71, the conversion portion 73, and the first connecting portion 72 can be used. However, in the present embodiment, the first connecting portion 72 includes only the first shift fork F1, of the first shift fork F1 and the second shift fork F2, and the first connecting portion 72 connects the second member 92 and the first sleeve member SL1 so that the first sleeve member SL1 reciprocates along the axial direction L as the second member 92 reciprocates along the axial direction L. For example, the configuration may be such that the first shift fork F1 is connected to the first fork shaft FS1 in the same manner as the second shift fork F2 in the first embodiment. Specifically, the configuration may be such that the first shift fork F1 is connected to the first fork shaft FS1 so as to constantly move integrally with the first fork shaft FS1 in the axial direction L.

### [Other Embodiments]

Next, other embodiments of the vehicle drive transmission device will be described.
(1) In each of the above embodiments, a configuration in which the intersecting direction X is set to extend along the outer circumference of the gear coaxially arranged with the third input member 13 as seen in the axial direction along the axial direction L has been be described as an example. However, the present disclosure is not limited to such a configuration, and the configuration may be such that the intersecting direction X is set to extend along the outer circumference of the first counter gear mechanism 31 as seen in the axial direction, or the intersecting direction X is set to extend along both the outer circumference of the gear arranged coaxially with the third input member 13 and the outer circumference of the first counter gear mechanism 31 as seen in the axial direction (that is, the intersecting direction X is set to extend along the outer circumference of the gear arranged coaxially with the third input member 13 as seen in the axial direction and the intersecting direction X is set to extend along the outer circumference of the first counter gear mechanism 31 as seen in the axial direction). Further, the configuration may be such that the intersecting direction X is set so as not to extend along neither the outer circumference of the gear arranged coaxially with the third input member 13 nor the outer circumference of the first counter gear mechanism 31 as seen in the axial direction.
(2) In each of the above embodiments, a configuration in which the first drive portion 71 reciprocates the first member 91 along the intersecting direction X by rotating the first rotating shaft 61 by the first electric motor M1 has been described as an example. However, the present disclosure is not limited to such a configuration, and for example, the configuration may be such that the first drive portion 71 reciprocates the first member 91 along the intersecting direction X by a thrust generated by a linear motor, a solenoid, or the like. In other words, as the first drive mechanism 70, an actuator of a type different from the electric actuator (for example, a hydraulic actuator, a solenoid actuator, or the like) may be used.
(3) In each of the above embodiments, a configuration in which the second drive portion 81 reciprocates the third member 93 along the axial direction L by rotating the second rotating shaft 62 by the second electric motor M2 has been described as an example. However, the present disclosure is not limited to such a configuration, and for example, the configuration may be such that the second drive portion 81 reciprocates the third member 93 along the axial direction L by a thrust generated by a linear motor, a solenoid, or the like. In other words, as the second drive mechanism 80, an actuator of a type different from the electric actuator (for example, a hydraulic actuator, a solenoid actuator, or the like) may be used. As described above, when the second drive portion 81 having a configuration different from that of each of the above embodiments is used, the configuration may be such that the second drive portion 81 reciprocates the third member 93 along the axial direction L on the seventh axis A7.
(4) In the first embodiment described above, a configuration in which the first gear G1 is connected to the third input member 13 so as to rotate integrally with the third input member 13, and the fourth gear G4 is connected to the first counter shaft 31a so as to rotate integrally with the first counter shaft 31a has been described as an example. However, the present disclosure is not limited to such a configuration, and the configuration may be such that the second gear G2 is connected to the third input member 13 so as to rotate integrally with the third input member 13, and the third gear G3 is connected to the first counter shaft 31a so as to rotate integrally with the first counter shaft 31a. In this case, the first gear G1 is selectively connected to the third input member 13 by the first switching mechanism SW1, and the fourth gear G4 is selectively connected to the first counter shaft 31a by the first switching mechanism SW1.
(5) In the second embodiment described above, a configuration in which the third gear G3 and the fourth gear G4 are connected to the first counter shaft 31a so as to rotate integrally with the first counter shaft 31a has been described as an example. However, the present disclosure is not limited to such a configuration, and the configuration may be such that the first gear G1 and the second gear G2 are connected to the third input member 13 so as to rotate integrally with the third input member 13. In this case, the third gear G3 and the fourth gear G4 are selectively connected to the first counter shaft 31a by the first switching mechanism SW1. In this case, the first axially moving portion 51 includes a member that is arranged coaxially with the first counter gear mechanism 31 and moves in the axial direction L, but does not include a member that is arranged coaxially with the third input member 13 and moves in the axial direction L.
(6) In each of the above embodiments, a configuration in which the first switching mechanism SW1 switches between two first transmission states and one first non-transmission state has been described as an example. However, the present disclosure is not limited to such a configuration, and the configuration may be such that the first switching mechanism SW1 switches between one first transmission state and one first non-transmission state. Specifically, the configuration may be such that only one of the gear pair of the first gear G1 and the third gear G3 and the gear pair of the second gear G2 and the fourth gear G4 is provided, and the first switching mechanism SW1 switches between a state in which a driving force is transmitted between the third input member 13 and the first counter shaft 31a via the one gear pair and a state in which the driving force is not transmitted between the third input member 13 and the first counter shaft 31a.
(7) In each of the above embodiments, a configuration in which the eighth gear G8 is connected to the second input member 12 so as to rotate integrally with the second input member 12 has been described as an example. However, the present disclosure is not limited to such a configuration, and the configuration may be such that the ninth gear G9 is connected to the second counter shaft 32a so as to rotate integrally with the second counter shaft 32a. In this case, the eighth gear G8 is selectively connected to the second input member 12 by the second switching mechanism SW2. In this case, the second axially moving portion 52 includes a member that is arranged coaxially with the second input member 12 and moves in the axial direction L.
(8) In each of the above embodiments, a configuration in which the second switching mechanism SW2 is provided in the second gear mechanism 22 has been described as an example. However, the present disclosure is not limited to such a configuration, and the configuration may be such that the second switching mechanism SW2 is not provided in the second gear mechanism 22 and the power transmission path between the second input member 12 and the differential input gear GD is constantly connected.
(9) In each of the above embodiments, a configuration in which the second gear mechanism 22 drivingly connects the second input member 12 and the differential input gear GD via the second counter gear mechanism 32 has been described as an example. However, the present disclosure is not limited to such a configuration, and the configuration may be such that the second gear mechanism 22 drivingly connects the second input member 12 and the differential input gear GD without the second counter gear mechanism 32. For example, the configuration may be such that the eighth gear G8 is arranged so as to mesh with the differential input gear GD.
(10) In each of the above embodiments, a case in which the first switching mechanism SW1 is configured by using the meshing type engagement device has been described as an example. However, the present disclosure is not limited to such a configuration, and the first switching mechanism SW1 may be configured by using a friction engagement device. In this case, the first axially moving portion 51 includes a pressing member (piston, pressure plate, or the like) that presses the friction plate. In each of the above embodiments, a case in which the second switching mechanism SW2 is configured by using the meshing type engagement device has been described as an example. However, the present disclosure is not limited to such a configuration, and the second switching mechanism SW2 may be configured by using a friction engagement device. In this case, the second axially moving portion 52 includes a pressing member (piston, pressure plate, or the like) that presses the friction plate.
(11) In each of the above embodiments, a configuration in which the vehicle drive transmission device 100 includes the first input member 11, the second input member 12, and the second gear mechanism 22 has been described as an example. However, the present disclosure is not limited to such a configuration, and for example, the configuration may be such that the vehicle drive transmission device 100 does not include the first input member 11, the vehicle drive transmission device 100 does not include the second input member 12 nor the second gear mechanism 22, or the above are combined.
(12) The configuration disclosed in each of the embodiments described above can be applied in combination with the configurations disclosed in other embodiments (including combinations of embodiments described as the other embodiments) as long as there is no contradiction. Regarding the other configurations, the embodiments disclosed herein are merely exemplary in all respects. Therefore, various modifications can be made as appropriate without departing from the scope of the present disclosure.

### [Summary of Present Embodiment]

Hereinafter, the outline of the vehicle drive transmission device described above will be described.

A vehicle drive transmission device (100) includes: an input member (13) drivingly connected to an internal combustion engine (3); a differential gear device (6) that includes a differential input gear (GD) and distributes rotation of the differential input gear (GD) to a pair of output members (5), each of the output members (5) being drivingly connected to a wheel (4); and a gear mechanism (21) that drivingly connects the input member (13) and the differential input gear (GD) via a counter gear mechanism (31), in which: a switching mechanism (SW1) for switching between a transmission state in which a driving force is transmitted between the input member (13) and the differential input gear (GD), and a non-transmission state in which a driving force is not transmitted between the input member (13) and the differential input gear (GD) is provided in the gear mechanism (21); the switching mechanism (SW1) includes an axially moving portion (51) that moves in an axial direction (L) to switch between the transmission state and the non-transmission state; the axially moving portion (51) includes at least one of a member (SL1) that is arranged coaxially with the input member (13) and moves in the axial direction (L), and a member (SL2) that is arranged coaxially with the counter gear mechanism (31) and moves in the axial direction (L); and a drive mechanism (70) that drives the axially moving portion (51) in the axial direction (L) includes a drive portion (71) that reciprocates a first member (91) along an intersecting direction (X) that is a direction that intersects the axial direction (L), a conversion portion (73) that converts a reciprocating motion of the first member (91) along the intersecting direction (X) into a reciprocating motion of a second member (92) along the axial direction (L), and a connecting portion (72) for connecting the second member (92) and the axially moving portion (51) such that the axially moving portion (51) reciprocates along the axial direction (L) as the second member (92) reciprocates along the axial direction (L).

According to this configuration, a drive mechanism (70) that drives the axially moving portion (51) in the axial direction (L) includes a drive portion (71) that reciprocates a first member (91) along an intersecting direction (X) that is a direction that intersects the axial direction (L), a conversion portion (73) that converts a reciprocating motion of the first member (91) along the intersecting direction (X) into a reciprocating motion of a second member (92) along the axial direction (L), and a connecting portion (72) for connecting the second member (92) and the axially moving portion (51) such that the axially moving portion (51) reciprocates along the axial direction (L) as the second member (92) reciprocates along the axial direction (L). Unlike the above configuration, when the drive mechanism (70) does not include the conversion portion (73), for example, the configuration may be such that the first member (91) reciprocates along the axial direction (L), which may increase the arrangement region of the drive portion (71) in the axial direction (L). In view of this, according to this configuration, the arrangement region of the drive portion (71) in the axial direction (L) can be kept small depending on the intersecting angle of the intersecting direction (X) with respect to the axial direction (L). As a result, it is possible to arrange the drive mechanism (70) while suppressing an increase in the dimension, in the axial direction (L), of the device (100) around the switching mechanism (SW1).

Here, it is preferable that the intersecting direction (X) is set to extend along at least one of an outer circumference of a gear (G1, G2, G7) arranged coaxially with the input member (13) and an outer circumference of the counter gear mechanism (31) as seen in the axial direction along the axial direction (L).

According to this configuration, the drive portion (71) that reciprocates the first member (91) along the intersecting direction (X) can be arranged in a space around at least one of the gears arranged coaxially with the members (SL1, SL2) included in the axially moving portion (51) so that the drive portion (71) does not protrude significantly from the peripheral members as seen in the axial direction. This makes it easier to set the shape of the vehicle drive transmission device (100) as seen in the axial direction to a shape having superior mountability on the vehicle.

It is also preferable that: the conversion portion (73) includes a lever member (74) that swings around a swing axis (R) that intersects both the axial direction (L) and the intersecting direction (X); when two directions intersecting the swing axis (R) are defined as a first direction (D1) and a second direction (D2), the lever member (74) includes a first extending portion (74a) extending from the swing axis (R) in the first direction (D1) and a second extending portion (74b) extending from the swing axis (R) in the second direction (D2); and an end portion of the first extending portion (74a) on a side opposite to the swing axis (R) side is connected to the first member (91), and an end portion of the second extending portion (74b) on a side opposite to the swing axis (R) side is connected to the second member (92).

According to this configuration, a thrust in the intersecting direction (X) acting from the first member (91) on the end portion of the first extending portion (74a) on the side opposite to the swing axis (R) side can be converted into a thrust in the axial direction (L) with the swinging of the lever member (74) around the swing axis (R) to cause the thrust to act on the second member (92) from the end portion of the second extending portion (74b) on the side opposite to the swing axis (R) side. Therefore, the conversion portion (73) that converts the reciprocating motion of the first member (91) along the intersecting direction (X) into the reciprocating motion of the second member (92) along the axial direction (L) can be appropriately realized.

It is also preferable that: the axially moving portion (51) includes a first axially moving member (SL1) that is a member that is arranged coaxially with the input member (13) and moves in the axial direction (L), and a second axially moving member (SL2) that is a member that is arranged coaxially with the counter gear mechanism (31) and moves in the axial direction (L); and the connecting portion (72) connects the second member (92) and the first axially moving member (SL1) such that the first axially moving member (SL1) reciprocates along the axial direction (L) as the second member (92) reciprocates along the axial direction (L), and connects the second member (92) and the second axially moving member (SL2) such that the second axially moving member (SL2) reciprocates along the axial direction (L) as the second member (92) reciprocates along the axial direction (L).

According to this configuration, as compared to the case in which the connecting portion (72) that reciprocates the first axially moving member (SL1) along the axial direction (L) and the connecting portion (72) that reciprocates the second axially moving member (SL2) along the axial direction (L) are provided separately, the drive mechanism (70) can be downsized. Therefore, it is easy to arrange the drive mechanism (70) while suppressing an increase in size of the vehicle drive transmission device (100).

It is also preferable that: the gear mechanism (21) includes a first gear (G1) and a second gear (G2) that are each arranged coaxially with the input member (13); the counter gear mechanism (31) includes a counter shaft (31a), a third gear (G3) that meshes with the first gear (G1), a fourth gear (G4) that meshes with the second gear (G2), and a fifth gear (G5) that rotates integrally with the counter shaft (31a) and meshes with the differential input gear (GD); a gear ratio between the first gear (G1) and the third gear (G3) is different from a gear ratio between the second gear (G2) and the fourth gear (G4); and the switching mechanism (SW1) is configured to switch between two transmission states and one non-transmission state, by switching between a state in which a driving force is transmitted between the input member (13) and the counter shaft (31a) via a gear pair of the first gear (G1) and the third gear (G3), a state in which a driving force is transmitted between the input member (13) and the counter shaft (31a) via a gear pair of the second gear (G2) and the fourth gear (G4), and a state in which a driving force is not transmitted between the input member (13) and the counter shaft (31a).

According to this configuration, by switching the transmission state of the driving force between the input member (13) and the differential input gear (GD) between two transmission states by the switching mechanism (SW1), the speed ratio between the input member (13) and the output member (5) can be switched. Therefore, as compared to the case in which the speed ratio between the input member (13) and the output member (5) is fixed, it becomes easier to operate the internal combustion engine (3) at an advantageous rotation speed from the viewpoint of fuel consumption rate, and thus energy efficiency can be improved.

It is also preferable that: when the input member (13) is defined as a third input member (13) and the gear mechanism (21) is defined as a first gear mechanism (21), the vehicle drive transmission device (100) includes a first input member (11) that is drivingly connected to a first rotary electric machine (1), a second input member (12) that is drivingly connected to a second rotary electric machine (2), and a second gear mechanism (22); the first gear mechanism (21) drivingly connects the first input member (11) and the third input member (13); and the second gear mechanism (22) drivingly connects the second input member (12) and the differential input gear (GD).

According to this configuration, the transmission state of the driving force between the third input member (13) and the differential input gear (GD) is switched to the non-transmission state by the switching mechanism (SW1), whereby an electric traveling mode and a series mode can be realized in the vehicle drive transmission device (100). Further, the transmission state of the driving force between the third input member (13) and the differential input gear (GD) is switched to the transmission state by the switching mechanism (SW1), whereby a parallel mode can be realized in the vehicle drive transmission device (100).

In a configuration including the first input member (11) drivingly connected to the first rotary electric machine (1) as described above, it is preferable that the drive mechanism (70) is arranged so as to overlap at least one of the first rotary electric machine (1) and the internal combustion engine (3) as seen in the axial direction along the axial direction (L), between the first rotary electric machine (1) and the internal combustion engine (3) in the axial direction (L).

As described above, in the vehicle drive transmission device (100) of the present disclosure, it is possible to arrange the drive mechanism (70) while suppressing an increase in the dimension, in the axial direction (L), of the device (100) around the switching mechanism (SW1). Therefore, as in this configuration, when the drive mechanism (70) is arranged so as to overlap at least one of the first rotary electric machine (1) and the internal combustion engine (3) as seen in the axial direction between the first rotary electric machine (1) and the internal combustion engine (3) in the axial direction (L), the drive mechanism (70) can be arranged while reducing the influence on the arrangement positions of the first rotary electric machine (1) and the internal combustion engine (3) in the axial direction (L).

It is also preferable that the third input member (13) and the counter gear mechanism (31) are arranged so as to overlap at least one of the first rotary electric machine (1) and the internal combustion engine (3) as seen in the axial direction along the axial direction (L), between the first rotary electric machine (1) and the internal combustion engine (3) in the axial direction (L).

As described above, in the vehicle drive transmission device (100) of the present disclosure, it is possible to arrange the drive mechanism (70) while suppressing an increase in the dimension, in the axial direction (L), of the device (100) around the switching mechanism (SW1) (that is, around the third input member (13) and the counter gear mechanism (31)). Therefore, as in this configuration, when the third input member (13) and the counter gear mechanism (31) are arranged so as to overlap at least one of the first rotary electric machine (1) and the internal combustion engine (3) as seen in the axial direction between the first rotary electric machine (1) and the internal combustion engine (3) in the axial direction (L), the drive mechanism (70) can be arranged while reducing the influence on the arrangement positions of the first rotary electric machine (1) and the internal combustion engine (3) in the axial direction (L).

It is also preferable that: when the switching mechanism (SW1) is defined as a first switching mechanism (SW1), the transmission state is defined as a first transmission state, the non-transmission state is defined as a first non-transmission state, the axially moving portion (51) is defined as a first axially moving portion (51), the drive mechanism (70) is defined as a first drive mechanism (70), the drive portion (71) is defined as a first drive portion (71), and the connecting portion (72) is defined as a first connecting portion (72), a second switching mechanism (SW2) for switching between a second transmission state in which a driving force is transmitted between the second input member (12) and the differential input gear (GD), and a second non-transmission state in which a driving force is not transmitted between the second input member (12) and the differential input gear (GD) is provided in the second gear mechanism (22); the second switching mechanism (SW2) includes a second axially moving portion (52) that moves in the axial direction (L) to switch between the second transmission state and the second non-transmission state; and a second drive mechanism (80) that drives the second axially moving portion (52) in the axial direction (L) includes a second drive portion (81) that reciprocates a third member (93) along the axial direction (L), and a second connecting portion (82) for connecting the third member (93) and the second axially moving portion (52) such that the second axially moving portion (52) reciprocates along the axial direction (L) as the third member (93) reciprocates along the axial direction (L).

According to this configuration, when the parallel mode is realized in the vehicle drive transmission device (100), by switching the transmission state of the driving force between the second input member (12) and the differential input gear (GD) from the second transmission state to the second non-transmission state by the second switching mechanism (SW2), the second rotary electric machine (2) can be disconnected from the differential input gear (GD). Therefore, when the second rotary electric machine (2) is stopped in the parallel mode, it is possible to avoid co-rotation of the second rotary electric machine (2). Such switching between the second transmission state and the second non-transmission state is performed by moving the second axially moving portion (52) included in the second switching mechanism (SW2) in the axial direction (L).

Further, in this configuration, a second drive mechanism (80) that drives the second axially moving portion (52) in the axial direction (L) includes a second drive portion (81) that reciprocates a third member (93) along the axial direction (L), and a second connecting portion (82) for connecting the third member (93) and the second axially moving portion (52) such that the second axially moving portion (52) reciprocates along the axial direction (L) as the third member (93) reciprocates along the axial direction (L). That is, the second drive mechanism (80) is not provided with a configuration corresponding to the conversion portion (73) of the first drive mechanism (70), and the third member (93) reciprocates along the axial direction (L) instead of the direction that intersects the axial direction (L). Therefore, according to this configuration, the second drive mechanism (80) can be simplified, and it is possible to arrange the second drive mechanism (80) while suppressing an increase in the dimension of the device (100) as seen in the axial direction.

It is also preferable that when the counter gear mechanism (31) is defined as a first counter gear mechanism (31), the second gear mechanism (22) drivingly connects the second input member (12) and the differential input gear (GD) via a second counter gear mechanism (32).

According to this configuration, as compared to the case in which the second gear mechanism (22) drivingly connects the second input member (12) and the differential input gear (GD) without the second counter gear mechanism (32), the speed ratio between the second input member (12) and the differential input gear (GD) can be easily set to a desired value, while avoiding that the diameter of the differential input gear (GD) becomes too large or the diameter of the gear (G8) arranged coaxially with the second input member (12) becomes too small.

The vehicle drive transmission device according to the present disclosure only needs to be capable of exerting at least one of the above-described effects.

### Description of the Reference Numerals

1: first rotary electric machine, 2: second rotary electric machine, 3: internal combustion engine, 4: wheel, 5: output member, 6: differential gear device, 11: first input member, 12: second input member, 13 : third input member (input member), 21: first gear mechanism (gear mechanism), 22: second gear mechanism, 31: first counter gear mechanism (counter gear mechanism), 31a: first counter shaft (counter shaft), 32: second counter gear mechanism, 51: first axially moving portion (axially moving portion), 52: second axially moving portion, 70: first drive mechanism (drive mechanism), 71: first drive portion (drive portion), 72: first connecting portion (connecting portion), 73: conversion portion, 74: lever member, 74a: first extending portion, 74b: second extending portion, 80: second drive mechanism, 81: second drive portion, 82: second connecting portion, 91: first member, 92: second member, 93: third member, 100: vehicle drive transmission device, D1: first direction, D2: second direction, GD: differential input gear, G1: first gear (gear arranged coaxially with third input member), G2: second gear (gear arranged coaxially with third input member), G3: third gear, G4: fourth gear, G5: fifth gear, G7: seventh gear (gear arranged coaxially with third input member), L: axial direction, R: swing axis, SL1: first sleeve member (first axially moving member), SL2: second sleeve member (second axially moving member), SW1: first switching mechanism (switching mechanism), SW2: second switching mechanism, X: intersecting direction

## Claims

1. A vehicle drive transmission device comprising:
an input member drivingly connected to an internal combustion engine;
a differential gear device that includes a differential input gear and distributes rotation of the differential input gear to a pair of output members, each of the output members being drivingly connected to a wheel; and
a gear mechanism that drivingly connects the input member and the differential input gear via a counter gear mechanism, wherein:
a switching mechanism for switching between a transmission state in which a driving force is transmitted between the input member and the differential input gear, and a non-transmission state in which a driving force is not transmitted between the input member and the differential input gear is provided in the gear mechanism;
the switching mechanism includes an axially moving portion that moves in an axial direction to switch between the transmission state and the non-transmission state;
the axially moving portion includes at least one of a member that is arranged coaxially with the input member and moves in the axial direction, and a member that is arranged coaxially with the counter gear mechanism and moves in the axial direction; and
a drive mechanism that drives the axially moving portion in the axial direction includes a drive portion that reciprocates a first member along an intersecting direction that is a direction that intersects the axial direction, a conversion portion that converts a reciprocating motion of the first member along the intersecting direction into a reciprocating motion of a second member along the axial direction, and a connecting portion for connecting the second member and the axially moving portion such that the axially moving portion reciprocates along the axial direction as the second member reciprocates along the axial direction.

2. The vehicle drive transmission device according to claim 1, wherein the intersecting direction is set to extend along at least one of an outer circumference of a gear arranged coaxially with the input member and an outer circumference of the counter gear mechanism as seen in the axial direction along the axial direction.

3. The vehicle drive transmission device according to claim 1 or 2, wherein:
the conversion portion includes a lever member that swings around a swing axis that intersects both the axial direction and the intersecting direction;
when two directions intersecting the swing axis are defined as a first direction and a second direction,
the lever member includes a first extending portion extending from the swing axis in the first direction and a second extending portion extending from the swing axis in the second direction; and
an end portion of the first extending portion on a side opposite to the swing axis side is connected to the first member, and an end portion of the second extending portion on a side opposite to the swing axis side is connected to the second member.

4. The vehicle drive transmission device according to any one of claims 1 to 3, wherein:
the axially moving portion includes a first axially moving member that is a member that is arranged coaxially with the input member and moves in the axial direction, and a second axially moving member that is a member that is arranged coaxially with the counter gear mechanism and moves in the axial direction; and
the connecting portion connects the second member and the first axially moving member such that the first axially moving member reciprocates along the axial direction as the second member reciprocates along the axial direction, and connects the second member and the second axially moving member such that the second axially moving member reciprocates along the axial direction as the second member reciprocates along the axial direction.

5. The vehicle drive transmission device according to any one of claims 1 to 4, wherein:
the gear mechanism includes a first gear and a second gear that are each arranged coaxially with the input member;
the counter gear mechanism includes a counter shaft, a third gear that meshes with the first gear, a fourth gear that meshes with the second gear, and a fifth gear that rotates integrally with the counter shaft and meshes with the differential input gear;
a gear ratio between the first gear and the third gear is different from a gear ratio between the second gear and the fourth gear; and
the switching mechanism is configured to switch between two transmission states and one non-transmission state, by switching between a state in which a driving force is transmitted between the input member and the counter shaft via a gear pair of the first gear and the third gear, a state in which a driving force is transmitted between the input member and the counter shaft via a gear pair of the second gear and the fourth gear, and a state in which a driving force is not transmitted between the input member and the counter shaft.

6. The vehicle drive transmission device according to any one of claims 1 to 5, wherein:
when the input member is defined as a third input member and the gear mechanism is defined as a first gear mechanism,
the vehicle drive transmission device includes a first input member that is drivingly connected to a first rotary electric machine, a second input member that is drivingly connected to a second rotary electric machine, and a second gear mechanism;
the first gear mechanism drivingly connects the first input member and the third input member; and
the second gear mechanism drivingly connects the second input member and the differential input gear.

7. The vehicle drive transmission device according to claim 6, wherein the drive mechanism is arranged so as to overlap at least one of the first rotary electric machine and the internal combustion engine as seen in the axial direction along the axial direction, between the first rotary electric machine and the internal combustion engine in the axial direction.

8. The vehicle drive transmission device according to claim 6 or 7, wherein the third input member and the counter gear mechanism are arranged so as to overlap at least one of the first rotary electric machine and the internal combustion engine as seen in the axial direction along the axial direction, between the first rotary electric machine and the internal combustion engine in the axial direction.

9. The vehicle drive transmission device according to any one of claims 6 to 8, wherein:
when the switching mechanism is defined as a first switching mechanism, the transmission state is defined as a first transmission state, the non-transmission state is defined as a first non-transmission state, the axially moving portion is defined as a first axially moving portion, the drive mechanism is defined as a first drive mechanism, the drive portion is defined as a first drive portion, and the connecting portion is defined as a first connecting portion,
a second switching mechanism for switching between a second transmission state in which a driving force is transmitted between the second input member and the differential input gear, and a second non-transmission state in which a driving force is not transmitted between the second input member and the differential input gear is provided in the second gear mechanism;
the second switching mechanism includes a second axially moving portion that moves in the axial direction to switch between the second transmission state and the second non-transmission state; and
a second drive mechanism that drives the second axially moving portion in the axial direction includes a second drive portion that reciprocates a third member along the axial direction, and a second connecting portion for connecting the third member and the second axially moving portion such that the second axially moving portion reciprocates along the axial direction as the third member reciprocates along the axial direction.

10. The vehicle drive transmission device according to any one of claims 6 to 9, wherein when the counter gear mechanism is defined as a first counter gear mechanism, the second gear mechanism drivingly connects the second input member and the differential input gear via a second counter gear mechanism.
